# EUROPEAN PATENT APPLICATION

(11) **EP 4 496 376 A1**
(43) Date of publication of application: **22.01.2025**
(21) Application number: 22931450.5
(22) Date of filing: 18.03.2022
(51) Int. Cl.: H04W 24/10

(54) **REPORTING METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/081766
(87) International publication number: WO 2023/173419

(57) **Abstract**

The present application relates to the field of mobile communications, and discloses a reporting method and apparatus, a device, and a storage medium. The method comprises: a terminal receiving configuration information sent by a network device, the configuration information comprising N reference signal resource sets, N being a positive integer greater than 2; and sending a report of the N reference signal resource sets according to the configuration information and on the basis of at least one group, wherein each group comprises M reference signal resources, M being a positive integer greater than 1 and not greater than N. In the present application, the report of the N reference signal resource sets is sent on the basis of the group. A measurement reporting mode supporting more reference signal resource sets is provided, and thus a transmission mode is expanded. Moreover, the report is sent on the basis of the group, then transmission beams supporting simultaneous reception are indicated, and then data sent by a plurality of transmission beams is received simultaneously, thereby improving transmission efficiency.

## Description

### TECHNICAL FIELD

The present application relates to the field of mobile communications, and in particular to a reporting method, apparatus, device, and storage medium.

### BACKGROUND

In a mobile communication system, a network device may provide services for a terminal through two Transmission Reception Points (TRPs), and the terminal may perform beam measurement on each TRP to feed back the beam measurement results to the network device. However, when a network device is configured with more than two TRPs to provide services for a terminal, how to report the measurement results is an urgent problem to be solved.

### SUMMARY

An embodiment of the present application provides a reporting method, apparatus, device, and storage medium. This provides a measurement reporting method that supports more reference signal resource sets, expands the transmission mode, and reports in a grouping way, thereby indicating the transmission beams that support simultaneous reception, simultaneously receiving data sent by multiple transmission beams, and improving transmission efficiency. The technical solution is as follows.

According to an aspect of the present application, a reporting method is provided. The method is performed by a terminal, and the method includes:
receiving configuration information sent by a network device, where the configuration information includes N reference signal resource sets, and N is a positive integer greater than 2; and
sending a report about the N reference signal resource sets based on at least one group according to the configuration information, where each group includes M reference signal resources, and M is a positive integer greater than 1 and not greater than N.

According to an aspect of the present application, a reporting method is provided. The method is performed by a network device, and the method comprises:
sending configuration information to a terminal, where the configuration information comprises N reference signal resource sets, and N is a positive integer greater than 2; and
receiving at least one group reported by a terminal, where the at least one group is reported based on the N reference signal resource sets in the configuration information, each group comprises M reference signal resources, and M is a positive integer greater than 1 and not greater than N.

According to an aspect of the present application, a reporting apparatus is provided, the apparatus comprising:
a receiving module, configured to receive configuration information sent by a network device, where the configuration information comprises N reference signal resource sets, and N is a positive integer greater than 2; and
a reporting module, configured to send a report about the N reference signal resource sets based on the configuration information and at least one group, where each group comprises M reference signal resources, and M is a positive integer greater than 1 and not greater than N.

According to an aspect of the present application, a reporting apparatus is provided, the apparatus comprising:
a sending module, configured to send configuration information to a terminal, where the configuration information comprises N reference signal resource sets, and N is a positive integer greater than 2; and
a receiving module, configured to receive at least one group reported by the terminal, where the at least one group is reported based on the N reference signal resource sets in the configuration information, each group comprises M reference signal resources, and M is a positive integer greater than 1 and not greater than N.

According to an aspect of the present application, a terminal is provided. The terminal comprises: a processor; a transceiver connected to the processor; and a memory for storing executable instructions of the processor. The processor is configured to load and execute the executable instructions to implement the reporting method as described above.

According to an aspect of the present application, a network device is provided. The network device comprises: a processor; a transceiver connected to the processor; and a memory for storing executable instructions of the processor. The processor is configured to load and execute the executable instructions to implement the reporting method as described above.

According to an aspect of the present application, a computer-readable storage medium is provided, in which executable program codes are stored. The executable program codes are loaded and executed by a processor to implement the reporting method as described above.

According to an aspect of the present application, a chip is provided, and the chip includes a programmable logic circuit and/or a program instruction. When the chip is running on a terminal or a network device, the reporting method as described above is implemented.

According to an aspect of the present application, a computer program product is provided. When the computer program product is executed by a processor of a terminal or a network device, the reporting method as described above is implemented.

In the reporting approach provided in embodiments of the present application, the terminal obtains N reference signal resource sets configured by the network device, and N is a positive integer greater than 2. The terminal performs measurements based on the N reference signal resource sets, and sends a report about the N reference signal resource sets in a grouping way. This provides a measurement reporting method that supports more reference signal resource sets, expands the transmission mode, and reports the report in a grouping way, thereby indicating the transmission beams that support simultaneous reception, simultaneously receiving data sent by multiple transmission beams, and improving transmission efficiency.

### BRIEF DESCRIPTION OF THE DRAWINGS

In order to more clearly illustrate the technical solutions in embodiments of the present application, the following will briefly introduce the drawings required for the description of embodiments. It is noted that the drawings described below are only some embodiments of the present application. For those of ordinary skills in the art, other drawings can be obtained based on these drawings without creative work.
Fig. 1 shows a block diagram of a communication system provided by an example embodiment of the present application;
Fig. 2 shows a block diagram of another communication system provided by an example embodiment of the present application;
Fig. 3 shows a block diagram of another communication system provided by an example embodiment of the present application;
Fig. 4 shows a flow chart of a reporting method provided by an example embodiment of the present application;
Fig. 5 shows a schematic diagram of a beam direction provided by an example embodiment of the present application;
Fig. 6 shows a block diagram of a reporting apparatus provided by an example embodiment of the present application;
Fig. 7 shows a block diagram of a reporting apparatus provided by an example embodiment of the present application; and
Fig. 8 shows a schematic structural diagram of a communication device provided by an example embodiment of the present application.

### DETAILED DESCRIPTION OF THE EMBODIMENTS

In order to make the purpose, technical solution, and advantages of the present application clearer, implementations of the present application will be further described in detail in conjunction with the accompanying drawings.

Here, example embodiments will be described in detail, and instances thereof are shown in the accompanying drawings. When the following description refers to the drawings, unless otherwise indicated, the same numbers in different drawings represent the same or similar elements. The implementations described in the following example embodiments do not represent all the implementations consistent with the present application. Instead, they are only examples of apparatus/devices and methods consistent with some aspects of the present application as detailed in the attached claims.

The terms used in the present application are only for the purpose of describing specific embodiments and are not intended to limit the present application. The singular forms "one", "said", and "the" used in the present application and the attached claims are also intended to include plural forms, unless the context clearly indicates other meanings. It should also be understood that the term "and/or" used herein refers to and includes any or all possible combinations of one or more associated items as listed.

It should be understood that although the terms first, second, third, etc. may be used in the present application to describe various information, these information should not be limited to these terms. These terms are only used to distinguish the same type of information from each other. For example, without departing from the scope of the present application, the first information may also be referred to as the second information, and similarly, the second information may also be referred to as the first information. Depending on the context, for example, the word "if" used herein may be interpreted as "while" or "when" or "in response to".

In the following, the application scenario of the present application is described.

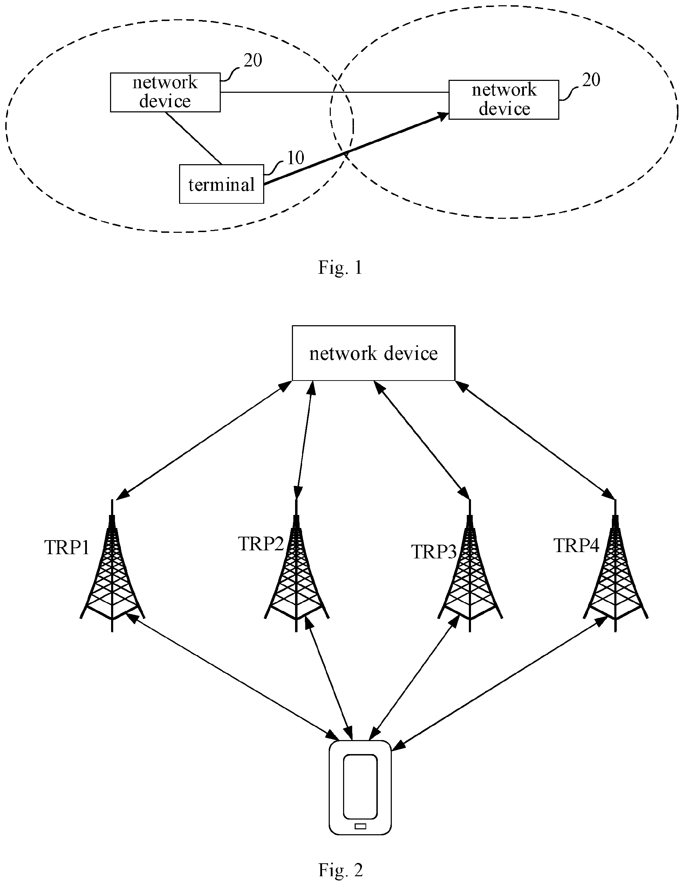

Fig. 1 shows a block diagram of a communication system provided by an example embodiment of the present application. The communication system may include: a terminal 10 and a network device 20.

There may be a plurality of terminals 10, and one or more terminals 10 may be distributed in a cell managed by each network device 20. The terminals 10 may include various handheld devices with wireless communication functions, vehicle-mounted devices, wearable devices, computing devices, or other processing devices connected to a wireless modem, as well as various forms of User Equipment (UE), Mobile Station (MS), etc. In an embodiment of the present application, for the convenience of description, the above-mentioned devices are collectively referred to as terminals.

The network device 20 is a device deployed in an access network to provide wireless communication functions for the terminals 10. For the convenience of description, in an embodiment of the present application, the above-mentioned devices that provide wireless communication functions for the terminals 10 are collectively referred to as network devices. The network device 20 and the terminal 10 may establish a connection through an air interface, so as to communicate through the connection, including the interaction of signaling and data. There may be multiple network devices 20, and two adjacent network devices 20 may also communicate through wired or wireless means. The terminal 10 may switch between different network devices 20, that is, establish connections with different network devices 20.

The network device 20 may include various forms of macro base stations, micro base stations, relay stations, access points, etc. In systems using different wireless access technologies, the names of devices with network device functions may be different. For example, in 5G NR systems, they are called gNodeB or gNB. With the evolution of communication technology, the name "network device" may change.

In some embodiments, a network device may include one or more Transmission Reception Points, or a gNB may include one or more panels (antenna panels).

For example, as shown in Fig. 2, a network device is configured with 4 TRPs, namely TRP1, TRP2, TRP3 and TRP4, and the network device establishes a communication connection with the terminal through these 4 TRPs, so that the network device can communicate with the terminal through the 4 TRPs.

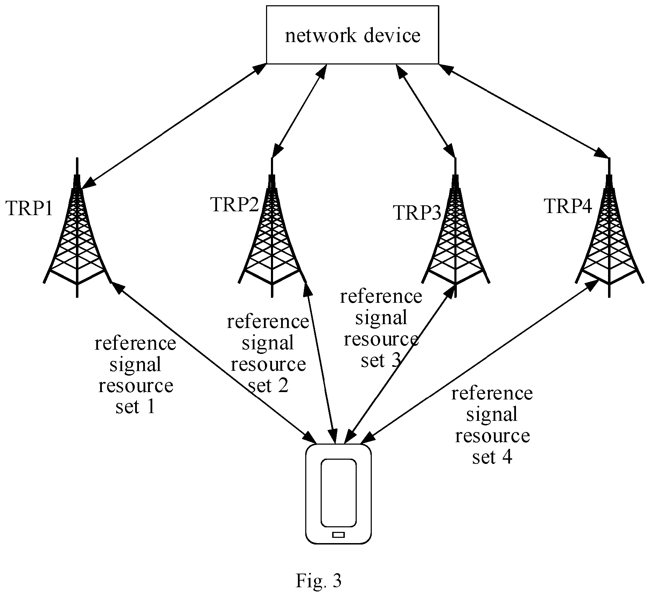

In addition, the network device may pre-configure multiple reference signal resource sets for the terminal, so that the terminal can perform measurements based on the configured multiple reference signal resource sets. As shown in Fig. 3, each reference signal resource set corresponds to a TRP. That is, if the network device configures 4 TRPs for the terminal, a reference signal resource set will be configured for each TRP. For example, TRP1 corresponds to reference signal resource set 1, TRP2 corresponds to reference signal resource set 2, TRP3 corresponds to reference signal resource set 3, and TRP4 corresponds to reference signal resource set 4. Optionally, the reference signal resource set may be replaced by a reference signal resource subset.

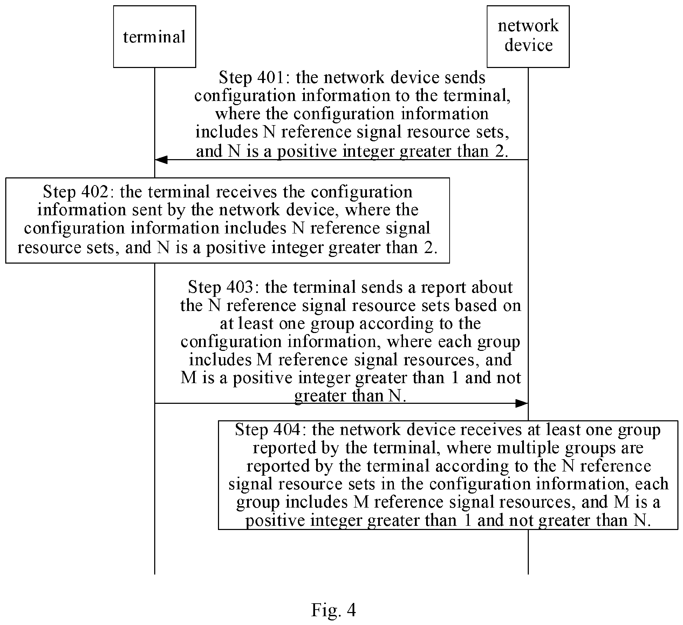

Fig. 4 shows a flowchart of a reporting method provided by an example embodiment of the present application, which can be applied to the terminal and the network device shown in Fig. 1. The method includes at least part of the following contents.

Step 401: the network device sends configuration information to the terminal, where the configuration information includes N reference signal resource sets, and N is a positive integer greater than 2.

In an embodiment of the present application, the network device needs to configure N reference signal resource sets for the terminal, and the N reference signal resource sets are carried in the configuration information. That is, the network device sends configuration information to the terminal to achieve the effect of the network device configuring the reference signal resource sets for the terminal. N is a positive integer greater than 2. For example, N is 3, 4, 6, 8, or other values, which are not limited in embodiments of the present application.

In some embodiments, the configuration information configures N reference signal resource sets through *CSI-ResourceConfig* (a type of configuration information).

Step 402: the terminal receives the configuration information sent by the network device, where the configuration information includes N reference signal resource sets, and N is a positive integer greater than 2.

After the network device sends the configuration information to the terminal, the terminal can receive the configuration information sent by the network device, so as to determine N reference signal resource sets from the configuration information.

Step 403: the terminal sends a report about the N reference signal resource sets based on at least one group according to the configuration information, where each group includes M reference signal resources, and M is a positive integer greater than 1 and not greater than N.

In an embodiment of the present application, after the network device configures N reference signal resource sets for the terminal, a reference signal is sent to the terminal based on the reference signal resources included in the configured N reference signal resource sets. For the terminal, after the terminal determines N reference signal resource sets based on the configuration information, it then receives the reference signal sent by the network device based on the reference signal resources in the N reference signal resource sets, measures the received reference signal, and sends a report about the N reference signal resource sets to the network device in the form of at least one group according to the measurement results, where each group includes M reference signal resources. M is a positive integer greater than 1 and not greater than N.

In the following, how the terminal reports a report in a grouping way is described in a diagrammatic manner. For example, in an embodiment of the present application, the network device is configured with measurements for four TRPs. For the terminal, when the terminal supports the ability to simultaneously receive multiple downlink transmission beams, it can measure the reference signal according to the reference signal resources of the four TRPs configured by the network device, and then report the measurement results based on the group(s).

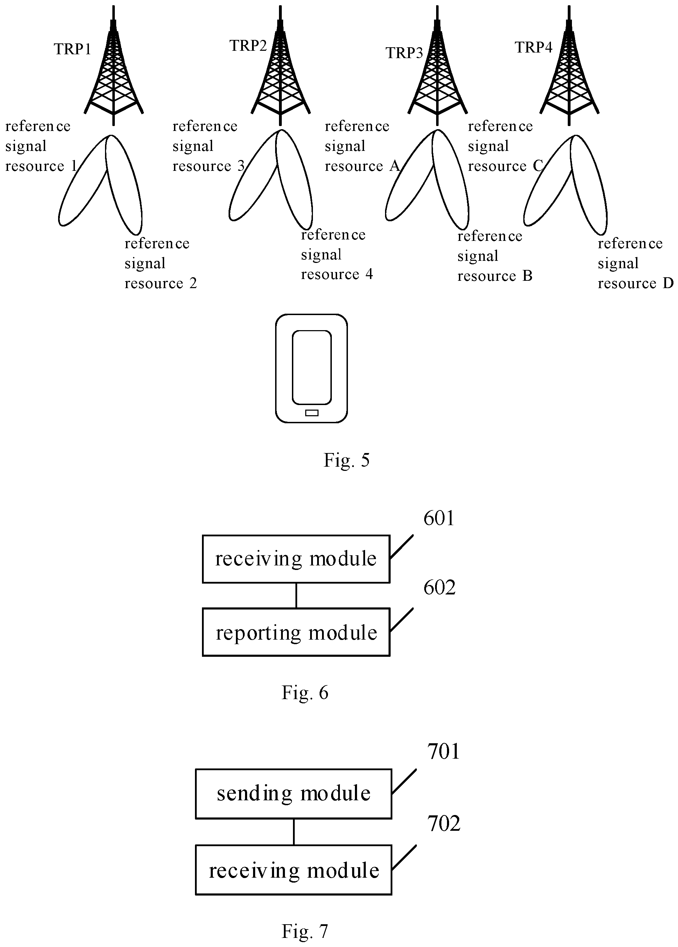

Referring to Fig. 5, the network device hopes to communicate with the terminal through at least one TRP of the four TRPs. Regarding each TRP, a reference signal resource set is configured for each TRP, and each reference signal resource set contains two reference signal resources. That is, TRP1 corresponds to reference signal resource 1 and reference signal resource 2, TRP2 corresponds to reference signal resource 3 and reference signal resource 4, TRP3 corresponds to reference signal resource A and reference signal resource B, and TRP4 corresponds to reference signal resource C and reference signal resource D.

It should be noted that an embodiment of the present application is described by taking TRP(s) corresponding to transmission beams in two directions as an example. In another embodiment, TRP(s) may also be analogous to an antenna panel(s). That is, the network device is provided with multiple antenna panels, each of which supports transmission beams in different directions.

For example, at the same moment of time, if the report is reported in a group-based way, taking the terminal reporting 4 reference signal resources as an example, the following combinations may exist: {reference signal resource 1, reference signal resource 3, reference signal resource A, reference signal resource C}, {reference signal resource 1, reference signal resource 3, reference signal resource A, reference signal resource D}, {reference signal resource 1, reference signal resource 3, reference signal resource B, reference signal resource C}, {reference signal resource 1, reference signal resource 3, reference signal resource B, reference signal resource D}, {reference signal resource 1, reference signal resource 4, reference signal resource A, reference signal resource C}, {reference signal resource 1, reference signal resource 4, reference signal resource B, reference signal resource C}, {reference signal resource 1, reference signal resource 4, reference signal resource A, reference signal resource D}, {reference signal resource 1, reference signal resource 4, reference signal resource B, reference signal resource D}, {reference signal resource 2, reference signal resource 3, reference signal resource A, transmission beam C}, {reference signal resource 2, reference signal resource 3, reference signal resource A, reference signal resource D}, {reference signal resource 2, reference signal resource 3, reference signal resource B, reference signal resource C}, {reference signal resource 2, reference signal resource 3, reference signal resource B, reference signal resource D}, {reference signal resource 2, reference signal resource 4, reference signal resource A, reference signal resource C}, {reference signal resource 2, reference signal resource 4, reference signal resource A, reference signal resource D}, {reference signal resource 2, reference signal resource 4, reference signal resource B, reference signal resource C}, {reference signal resource 2, reference signal resource 4, reference signal resource B, reference signal resource D}. In addition, the terminal may also send a report about three reference signal resources, which are not listed one by one here.

It should be noted that an embodiment of the present application is only described by taking reference signal resources as an example. In fact, referring to Fig. 5 above, each reference signal resource actually corresponds to a reference signal. For example, reference signal resource 1 corresponds to reference signal 1, reference signal resource 2 corresponds to reference signal 2, and so on. Each reference signal resource corresponds to a reference signal.

The terminal may report at least one group. For each group, the terminal may simultaneously receive multiple reference signal resources corresponding to the same group, but cannot simultaneously receive multiple reference signal resources corresponding to different groups.

In some embodiments, when the terminal reports the report, the reference signal resource identifier corresponding to each reference signal and the signal quality of the corresponding reference signal are reported. The reference signal resource identifier includes CRI (CSI-RS resource ID, Channel State Information Reference Signal resource identifier) or SSBRI (SSB resource ID, Synchronization Signal Block resource identifier). The signal quality includes L1-RSRP (Layer 1 Reference Signal Received Power) or L1-SINR (Layer 1 Signal to Interference plus Noise Ratio).

In some embodiments, the M reference signal resources belong to different reference signal resource sets. That is, for the terminal, each group reported by the terminal includes different reference signal resources included in different reference signal resource sets. At the same moment of time, the terminal may simultaneously receive a reference signal resource included in different reference signal resource sets, and may simultaneously receive the same reference signal resource included in different reference signal resource sets.

In some embodiments, each reference signal resource set corresponds to a TRP. That is, for the terminal, at the same moment of time, the terminal will receive a reference signal sent by each TRP among multiple TRPs.

In some embodiments, the reference signal resource set includes at least one CSI-RS (Channel State Information Reference Signal) resource and/or at least one SSB (Synchronization Signal Block) resource. For example, each reference signal resource set includes at least one CSI-RS resource. The network device may send CSI-RS to the terminal through the CSI-RS resource included in the reference signal resource set. The terminal receives CSI-RS based on the CSI-RS resource included in the reference signal resource set, and then measures the CSI-RS to obtain the signal quality of the reference signal. Alternatively, each reference signal resource set includes at least one SSB resource, and the network device may send SSB to the terminal through the SSB resource included in the reference signal resource set. The terminal receives SSB based on the SSB resource included in the reference signal resource set, and then measures the SSB to obtain the signal quality of the reference signal.

In some embodiments, each group of at least one group includes M reference signal resources, and the M reference signal resources are used to indicate that the number of reference signal resources supported by the terminal for simultaneous reception is M. That is, the M reference signal resources included in each group are actually the reference signal resources that are reported by the terminal and can be received simultaneously by the terminal.

Step 404: the network device receives at least one group reported by the terminal. The at least one group is reported by the terminal according to the N reference signal resource sets in the configuration information. Each group includes M reference signal resources, where M is a positive integer greater than 1 and not greater than N.

In an embodiment of the present application, the network device receives at least one group reported by the terminal, and then determines the corresponding transmission beam in each group to perform data transmission with the terminal.

It should be noted that the steps performed by the network device may form an embodiment alone, and the steps performed by the terminal may also form an embodiment alone, and the present application is not limited in this regard.

According to an embodiment of the present application, the terminal obtains N reference signal resource sets configured by the network device, where N is a positive integer greater than 2. The terminal performs measurements based on the N reference signal resource sets, and sends a report about the N reference signal resource sets in a grouping way. A measurement reporting method that supports more reference signal resource sets is provided, the transmission mode is expanded, and the report is reported in a grouping way, thereby indicating the transmission beams that support simultaneous reception, and simultaneously receiving data sent by multiple transmission beams, thereby improving transmission efficiency.

On the basis of the embodiment shown in Fig. 4, when the terminal reports each group, each group includes the following indication information:
first indication information, where the first indication information indicates the number of reference signal resources included in a group.

In an embodiment of the present application, a group includes at most 4 reference signal resources. Therefore, in the group, the first indication information is used to indicate the number of reference signal resources included in the group corresponding to the first indication information, thereby indicating the number of reference signal resources that the terminal supports to receive simultaneously.

For example, taking an example where the network device is configured with 4 reference signal resource sets, the group reported by the terminal includes at most 4 reference signal resources. That is, the first indication information in a group may indicate the number of reference signal resources included in a group using 2 bits. For example, the first indication information 11 indicates that the group corresponding to the first indication information includes 4 reference signal resources, and the first indication information 10 indicates that the group corresponding to the first indication information includes 3 reference signal resources.

(2) second indication information, where the second indication information indicates the identifier of the reference signal resource set corresponding to each parameter pair, and the parameter pair includes the reference signal resource identifier and the signal quality corresponding to the reference signal resource identifier.

In an embodiment of the present application, when the terminal reports the signal quality of a measured reference signal, it is necessary to report the reference signal resource and the signal quality corresponding to the reference signal resource. The present application uses a parameter pair to represent the reference signal resource identifier and the corresponding signal quality. In addition, the reference signal resource set to which the reference signal resource belongs is also reported, so that the network device can determine the reference signal resource corresponding to the reference signal resource set that the terminal supports to receive simultaneously. For the reference signal resource set identifier in the group, it is indicated by the second indication information.

In some embodiments, the identifier of a reference signal resource set is represented by 2 bits, and the second indication information in a group includes a total of 2X bits, where X is the number of reference signal resources indicated by the first indication information.

(3) third indication information, where the third indication information indicates each reference signal resource identifier and the signal quality corresponding to the reference signal resource identifier.

In an embodiment of the present application, after the terminal measures the reference signal corresponding to the reference signal resource configured by the network device, it is necessary to report the reference signal resource identifier and the signal quality corresponding to the reference signal resource identifier. The reference signal resource identifier and the signal quality corresponding to the reference signal resource identifier are both indicated by the third indication information.

It should be noted that each group in an embodiment of the present application includes a first indication information. For the second indication information and the third indication information, the group includes the signal qualities of X reference signal resources, and the group includes X second indication information and X third indication information. That is, the second indication information and the third indication information have a one-to-one correspondence.

In some embodiments, at least one group includes the absolute value of the signal quality of the reference signal resource corresponding to the strongest signal quality, and the relative value of the signal quality of the reference signal resource corresponding to the non-strongest signal quality to the strongest signal quality. That is to say, each group in the at least one group includes both the absolute value of the signal quality of the reference signal resource with the strongest signal quality as well as the relative value of the signal quality of the reference signal resource with the non-strongest signal quality to the strongest signal quality. The relative value indicates the signal quality of the reference signal resource with the non-strongest signal quality based on the strongest signal quality.

For example, if the reference signal resource A in all the reference signal resource sets corresponds to the strongest signal quality A, and other reference signal qualities include signal quality 1 of reference signal resource 1, signal quality 2 of reference signal resource 2, and signal quality 3 of reference signal resource 3, while the relative value of signal quality 1 to the strongest signal quality is 0.1, the relative value of signal quality 2 to the strongest signal quality is 0.2, and the relative value of signal quality 3 to the strongest signal quality is 0.3, then signal quality 1 is the product or sum of A and 0.1, signal quality 2 is the product or sum of A and 0.2, and signal quality 3 is the product or sum of A and 0.3.

Alternatively, at least one group includes the quantized value of the absolute value of the signal quality of the reference signal resource corresponding to the strongest signal quality, and the quantized value of the relative value of the signal quality of the reference signal resource corresponding to the non-strongest signal quality to the strongest signal quality.

The quantized value may be understood as the value after the signal quality is quantized. For example, the absolute value of the signal quality has a corresponding relationship with the quantization value. After determining the quantization value of the absolute value of the strongest signal quality, the corresponding strongest signal quality may be determined according to the corresponding relationship and the determined quantization value. For another example, the relative value of the signal quality to the strongest signal quality has a corresponding relationship with the quantization value. After determining the quantization value of the relative value, the corresponding relative value may be determined according to the corresponding relationship and the determined quantization value, and then other signal qualities are determined based on the relative value and the strongest signal quality.

In some embodiments, the indication information corresponding to the reference signal resource corresponding to the strongest signal quality in the target group among at least one group is located at a first position, and the target group is a group to which the reference signal resource corresponding to the strongest signal quality belongs in the at least one group. In addition, the indication information corresponding to other reference signal resources in the target group except the reference signal resource corresponding to the strongest signal quality is arranged according to the identifiers of the reference signal resource sets to which the other reference signal resources belong.

Optionally, the indication information corresponding to other reference signal resources in the target group except the reference signal resource corresponding to the strongest signal quality is arranged according to the identifiers of the reference signal resource sets to which the other reference signal resources belong, including any of the following situations:
for the indication information corresponding to other reference signal resources in the target group except the reference signal resource corresponding to the strongest signal quality, the indication information is arranged in a descending order according to the identifiers of the reference signal resource sets to which the other reference signal resources belong.
for the indication information corresponding to other reference signal resources in the target group except the reference signal resource corresponding to the strongest signal quality, the indication information is arranged in an ascending order according to the identifiers of the reference signal resource sets to which the other reference signal resources belong.
for the indication information corresponding to other reference signal resources in the target group except the reference signal resource corresponding to the strongest signal quality, the indication information is arranged in a cyclic order.

The cyclic order is to make arrangements according to the relationship between the identifiers of the reference signal resource sets to which the other reference signal resources belong and the identifier of the reference signal resource set to which the reference signal resource corresponding to the strongest signal quality belongs.

Further, the cyclic order may be understood as follows. The indication information corresponding to the reference signal resource corresponding to the strongest signal quality is located in the first position. For the reference signal resource set whose reference signal resource set identifier is greater than the reference signal resource set identifier to which the reference signal resource corresponding to the strongest signal quality belongs, the indication information corresponding to the reference signal resource included in the reference signal resource set is located after the first position. For the reference signal resource set whose reference signal resource set identifier is less than the reference signal resource set identifier to which the reference signal resource corresponding to the strongest signal quality belongs, the indication information corresponding to the reference signal resources included in the reference signal resource set is arranged in an ascending order.

For example, there are 4 reference signal resource sets in total, reference signal resource set #1, reference signal resource set #2, reference signal resource set #3, and reference signal resource set #4. The reference signal resource set to which the reference signal resource corresponding to the strongest signal quality belongs is reference signal resource set #2. The order of the other sets is reference signal resource set #3, reference signal resource set #4, and reference signal resource set #1. That is, the order of the 4 sets is reference signal resource set #2, reference signal resource set #3, reference signal resource set #4, and reference signal resource set #1.

For another example, there are 4 reference signal resource sets, reference signal resource set #1, reference signal resource set #2, reference signal resource set #3, and reference signal resource set #4. The reference signal resource set to which the reference signal resource corresponding to the strongest signal quality belongs is reference signal resource set #3. The order of the other sets is reference signal resource set #4, reference signal resource set #1, and reference signal resource set #2. That is, the order of the 4 sets is reference signal resource set #3, reference signal resource set #4, reference signal resource set #1, and reference signal resource set #2.

In some embodiments, the indication information corresponding to the reference signal resources in other groups except the target group among multiple groups is arranged according to the identifiers of the reference signal resource sets to which the reference signal resources belong, or arranged according to the arrangement order of the reference signal resources in the target group.

Optionally, the indication information corresponding to the reference signal resources in other groups except the target group among the multiple groups is arranged according to the identifiers of the reference signal resource sets to which the reference signal resources belong, including any of the following situations:
for the indication information corresponding to the reference signal resources in other groups except the target group among the multiple groups, the indication information is arranged in a descending order according to the identifiers of the reference signal resource sets to which the reference signal resources belong.
for the indication information corresponding to the reference signal resources in other groups except the target group among the multiple groups, the indication information is arranged in an ascending order according to the identifiers of the reference signal resource sets to which the reference signal resources belong.

According to an embodiment of the present application, the terminal sends a report about N reference signal resource sets in a grouping way. This provides a measurement reporting method that supports more reference signal resource sets, expands the transmission mode, and specifies the indication information included in each group, so that the network device determines the measurement result of the terminal based on the indication information in the group(s), and then sends data based on multiple transmission beams at the same time, thereby improving the transmission efficiency.

For the above-mentioned various situations, the following is explained by way of example. For example, the indication information corresponding to the reference signal resource corresponding to the strongest signal quality in the target group is located in the first position, and the indication information corresponding to other reference signal resources in the target group except the reference signal resource corresponding to the strongest signal quality is arranged in an ascending order according to the identifiers of the reference signal resource sets to which the other reference signal resources belong. The indication information corresponding to the reference signal resources in another group other than the target group is arranged in an ascending order according to the identifiers of the reference signal resource sets to which the reference signal resources belongs. Table 1 is the target group, Table 2 is another group other than the target group in at least one group, and the other groups are explained by taking only one group as an example.

**Table 1**

| | | |
|---|---|---|
| first indication information ("10", indicating that 3 reference signal resources are included) | | |
| second indication information reference signal resource set Set#3 | third indication information (SSBRI/CRI) reference signal resource SSBRI/CRI#5 | third indication information (L1-RSRP/L1-SINR) absolute value (7 bits) |
| second indication information reference signal resource set Set#2 | reference signal resource SSBRI/CRI#1 | third indication information (L1-RSRP/L1-SINR) relative value (4 bits) |
| second indication information reference signal resource set Set#4 | third indication information (SSBRI/CRI) reference signal resource SSBRI/CRI#5 | third indication information (L1-RSRP/L1-SINR) relative value (4 bits) |

**Table 2**

| | | |
|---|---|---|
| first indication information ("11", indicating that 4 reference signal resources are included) | | |
| second indication information reference signal resource set Set#1 | third indication information (SSBRI/CRI) reference signal resource SSBRI/CRI#5 | third indication information (L1-RSRP/L1-SINR) relative value (4 bits) |
| second indication information reference signal resource set Set#2 | third indication information (SSBRI/CRI) reference signal resource SSBRI/CRI#1 | third indication information (L1-RSRP/L1-SINR) relative value (4 bits) |
| second indication information reference signal resource set Set#3 | third indication information (SSBRI/CRI) reference signal resource SSBRI/CRI#27 | third indication information (L1-RSRP/L1-SINR) relative value (4 bits) |
| second indication information reference signal resource set Set#4 | third indication information (SSBRI/CRI) reference signal resource SSBRI/CRI#32 | third indication information (L1-RSRP/L1-SINR) relative value (4 bits) |

Alternatively, other groups in an embodiment of the present application may also be arranged in the same order as the indication information corresponding to the reference signal resources in Table 1, for example, see Table 3.

**Table 3**

| | | |
|---|---|---|
| first indication information ("10", indicating that 3 reference signal resources are included) | | |
| second indication information reference signal resource set Set#3 | third indication information (SSBRI/CRI) reference signal resource SSBRI/CRI#4 | third indication information (L1-RSRP/L1-SINR) relative value (4 bits) |
| second indication information reference signal resource set Set#2 | third indication information (SSBRI/CRI) reference signal resource SSBRI/CRI#2 | third indication information (L1-RSRP/L1-SINR) relative value (4 bits) |
| second indication information reference signal resource set Set#4 | third indication information (SSBRI/CRI) reference signal resource SSBRI/CRI#5 | third indication information (L1-RSRP/L1-SINR) relative value (4 bits) |

Alternatively, the indication information corresponding to the reference signal resources of other groups in an embodiment of the present application is arranged in a descending order according to the identifiers of the reference signal resource sets to which the reference signal resources belong, see Table 4.

**Table 4**

| | | |
|---|---|---|
| first indication information ("11", indicating that 4 reference signal resources are included) | | |
| second indication information reference signal resource set Set#4 | third indication information (SSBRI/CRI) reference signal resource SSBRI/CRI#32 | third indication information (L1-RSRP/L1-SINR) relative value (4 bits) |
| second indication information reference signal resource set Set#3 | third indication information (SSBRI/CRI) reference signal resource SSBRI/CRI#27 | third indication information (L1-RSRP/L1-SINR) relative value (4 bits) |
| second indication information reference signal resource set Set#2 | third indication information (SSBRI/CRI) reference signal resource SSBRI/CRI# 1 | third indication information (L1-RSRP/L1-SINR) relative value (4 bits) |
| second indication information reference signal resource set Set#1 | third indication information (SSBRI/CRI) reference signal resource SSBRI/CRI#5 | third indication information (L1-RSRP/L1-SINR) relative value (4 bits) |

It should be noted that an embodiment of the present application is only described by taking the following as an example: the indication information corresponding to the reference signal resource corresponding to the strongest signal quality in the target group is located at the first position. In another embodiment, the indication information corresponding to the reference signal resources in the target group is arranged according to the identifiers of the reference signal resource sets to which the reference signal resources belong.

For example, the indication information corresponding to the reference signal resources in the target group is arranged in an ascending order according to the identifiers of the reference signal resource sets to which the reference signal resources belong. See Table 5.

**Table 5**

| | | |
|---|---|---|
| first indication information ("10", indicating that 3 reference signal resources are included) | | |
| second indication information reference signal resource set Set#2 | third indication information (SSBRI/CRI) reference signal resource SSBRI/CRI# 1 | third indication information (L1-RSRP/L1-SINR) relative value (4 bits) |
| second indication information reference signal resource set Set#3 | third indication information (SSBRI/CRI) reference signal resource SSBRI/CRI#5 | third indication information (L1-RSRP/L1-SINR) absolute value (7 bits) |
| second indication information reference signal resource set Set#4 | third indication information (SSBRI/CRI) reference signal resource SSBRI/CRI#5 | third indication information (L1-RSRP/L1-SINR) relative value (4 bits) |

In addition, when the indication information corresponding to the reference signal resources in the target group according to an embodiment of the present application is arranged according to the identifiers of the reference signal resource sets, the indication information corresponding to the reference signal resource corresponding to the strongest signal quality in the target group is located in the first position, and the indication information corresponding to other reference signal resources in the target group may be arranged in the above-mentioned cyclic order. For example, see Table 6, which shows the arrangement order of the indication information in the above-mentioned target group.

**Table 6**

| first indication information ("11", indicating that 4 reference signal resources are included) | | |
|---|---|---|
| second indication information reference signal resource set Set#3 | third indication information (SSBRI/CRI) reference signal resource SSBRI/CRI#27 | third indication information (L1-RSRP/L1-SINR) relative value (4 bits) |
| second indication information reference signal resource set Set#4 | third indication information (SSBRI/CRI) reference signal resource SSBRI/CRI#32 | third indication information (L1-RSRP/L1-SINR) relative value (4 bits) |
| resource set Set#1 | third indication information (SSBRI/CRI) reference signal resource SSBRI/CRI#1 | third indication information (L1-RSRP/L1-SINR) relative value (4 bits) |
| second indication information reference signal resource set Set#2 | third indication information (SSBRI/CRI) reference signal resource SSBRI/CRI#5 | third indication information (L1-RSRP/L1-SINR) relative value (4 bits) |

On the basis of the embodiment shown in Fig. 4, when the terminal reports each group, each group includes the following indication information:
fourth indication information, where the fourth indication information indicates the reference signal resource set included in the group to which the fourth indication information belongs.

In an embodiment of the present application, the fourth indication information in the group may indicate the reference signal resource set included in the group corresponding to the fourth indication information.

In some embodiments, corresponding relationship exists between the fourth indication information and the reference signal resource set included in the group, and the reference signal resource set included in the group may be determined according to the number of bits indicated by the fourth indication information and the corresponding relationship.

For example, if the network device is configured with 4 reference signal resource sets, and the 4 reference signal resource sets are represented by Set#1, Set#2, Set#3 and Set#4 respectively, then for the fourth indication information, 4 bits are required to indicate 11 combinations. The fourth indication information may indicate the following combinations:
0000: set#1 and set#2; (2) 0001: set#1 and set#3; (3) 0010: set#1 and set#4; (4) 0011: set#2 and set#3; (5) 0100: set#2 and set#4; (6) 0101: set#3 and set#4; (7) 0110: set#1, set#2, and set#3; (8) 0111: set#1, set#3, and set#4; (9) 1000: set#1, set#2, and set#4; (10) 1001: set#2, set#3, and set#4; (11) 1010: set#1, set#2, set#3, and set#4.

It should be understood that the above method for indicating the combinations using bits is only an example, and other methods for indicating the combinations using the fourth indication information are also possible, and the present disclosure is not limited in this regard.

(2) fifth indication information, where the fifth indication information indicates the identifier of the reference signal resource set to which the reference signal resource corresponding to the strongest signal quality belongs.

For at least one group, there is a target group including the signal quality of the reference signal resource corresponding to the strongest signal quality. In order to indicate the reference signal resource set to which the reference signal resource corresponding to the strongest signal quality belongs, the fifth indication information in the group is used to indicate the identifier of the reference signal resource set to which the reference signal resource corresponding to the strongest signal quality belongs.

In some embodiments, the fifth indication information directly indicates the identifier of the reference signal resource set. For example, if the network device is configured with 4 reference signal resource sets, the fifth indication information may be 2 bits, respectively indicating the identifiers of the 4 reference signal resource sets.

In some other embodiments, the fifth indication information indicates the identifier of the position where each reference signal resource set in the corresponding group is located. For example, if the group includes two reference signal resource sets, namely set#3 and set#4, and set#3 is located at the first position and set#4 is located at the second position, the fifth indication information may be indicated by one bit. For example, if the fifth indication information is 0, it indicates set#3, and if the fifth indication information is 1, it indicates set#4.

It should be noted that the present application only takes the fifth indication information being included in the group as an example for explanation. In another embodiment, the fifth indication information is included when the group meets certain conditions.

Optionally, when the target group includes the strongest signal quality, the target group includes the fifth indication information. That is to say, when the strongest signal quality is included in the group, the fifth indication information is included in the group, and when the strongest signal quality is not included in the group, the fifth indication information is not included.

(3) third indication information, where the third indication information indicates each reference signal resource identifier and the signal quality corresponding to the reference signal resource identifier.

The third indication information is similar to the third indication information in the above embodiment, and will not be repeated here.

It should be noted that in an embodiment of the present application, the indication information corresponding to each reference signal resource has been arranged according to the identifier of the reference signal resource set to which the reference signal resource belongs. Therefore, the reference signal resource set to which each reference signal resource belongs can be determined according to the position in the group where the indication information is located.

In addition, as described in the above embodiment, if the strongest signal quality is not included in the group, the fifth indication information is not included in the group. That is, at least one of the following indication information is in other groups except the target group:
fourth indication information.
third indication information.

In some embodiments, at least one group includes the absolute value of the signal quality of the reference signal resource corresponding to the strongest signal quality, and the relative value of the signal quality of the reference signal resource corresponding to the non-strongest signal quality to the strongest signal quality.

Alternatively, at least one group includes the quantized value of the absolute value of the signal quality of the reference signal resource corresponding to the strongest signal quality, and the quantized value of the relative value of the signal quality of the reference signal resource corresponding to the non-strongest signal quality to the strongest signal quality.

The signal quality in an embodiment of the present application is similar to the signal quality indication in the above embodiment, which is not repeated here.

In some embodiments, the indication information corresponding to the reference signal resource corresponding to the strongest signal quality included in the target group is located in the first position, and the target group is a group to which the reference signal resource corresponding to the strongest signal quality belongs in at least one group. In addition, the indication information corresponding to other reference signal resources in the target group except the reference signal resource corresponding to the strongest signal quality is arranged according to the identifiers of the reference signal resource sets to which the other reference signal resources belong.

Optionally, the indication information corresponding to other reference signal resources except the reference signal resource corresponding to the strongest signal quality in the target group is arranged according to the identifiers of the reference signal resource sets to which the other reference signal resources belong, including any of the following situations:
for the indication information corresponding to other reference signal resources except the reference signal resource corresponding to the strongest signal quality in the target group, the indication information is arranged in a descending order according to the identifiers of the reference signal resource sets to which the other reference signal resources belong.
for the indication information corresponding to other reference signal resources except the reference signal resource corresponding to the strongest signal quality in the target group, the indication information is arranged in an ascending order according to the identifiers of the reference signal resource sets to which the other reference signal resources belong.
for the indication information corresponding to other reference signal resources except the reference signal resource corresponding to the strongest signal quality in the target group, the indication information is arranged in a cyclic order.

The cyclic order is to make arrangements according to the relationship between the identifiers of the reference signal resource sets to which the other reference signal resources belong and the identifier of the reference signal resource set to which the reference signal resource corresponding to the strongest signal quality belongs.

Further, the cyclic order may be understood as follows. The indication information corresponding to the reference signal resource corresponding to the strongest signal quality is located in the first position. For the reference signal resource set whose reference signal resource set identifier is greater than the reference signal resource set identifier to which the reference signal resource corresponding to the strongest signal quality belongs, the indication information corresponding to the reference signal resource included in the reference signal resource set is located after the first position. For the reference signal resource set whose reference signal resource set identifier is less than the reference signal resource set identifier to which the reference signal resource corresponding to the strongest signal quality belongs, the indication information corresponding to the reference signal resources included in the reference signal resource set is arranged in an ascending order.

For example, there are 4 reference signal resource sets in total, that is, reference signal resource set #1, reference signal resource set #2, reference signal resource set #3, and reference signal resource set #4. The reference signal resource set to which the reference signal resource corresponding to the strongest signal quality belongs is reference signal resource set #2. The order of the other sets is reference signal resource set #3, reference signal resource set #4, and reference signal resource set #1. That is, the order of the 4 sets is reference signal resource set #2, reference signal resource set #3, reference signal resource set #4, and reference signal resource set #1.

In some embodiments, the indication information corresponding to the reference signal resources included in other groups except the target group among the multiple groups is arranged according to the identifiers of the reference signal resource sets to which the reference signal resources belong, or arranged according to the arrangement order of the reference signal resources in the target group.

Optionally, the indication information corresponding to the reference signal resources in other groups except the target group among the multiple groups is arranged according to the identifiers of the reference signal resource sets to which the reference signal resources belong, including any of the following situations:
for the indication information corresponding to the reference signal resources in other groups except the target group among the multiple groups, the indication information is arranged in a descending order according to the identifiers of the reference signal resource sets to which the reference signal resources belong.
for the indication information corresponding to the reference signal resources in other groups except the target group among the multiple groups, the indication information is arranged in an ascending order according to the identifiers of the reference signal resource sets to which the reference signal resources belong.

According to an embodiment of the present application, the terminal sends a report about N reference signal resource sets in a grouping way. This provides a measurement reporting method that supports more reference signal resource sets, expands the transmission mode, and specifies the indication information included in each group, so that the network device determines the measurement result of the terminal based on the indication information in the group(s), and then sends data based on multiple transmission beams at the same time, thereby improving the transmission efficiency.

For the above-mentioned various situations, the following is explained by way of example. For example, the indication information corresponding to the strongest signal quality in the target group is located in the first position, and the indication information corresponding to other reference signal resources in the target group except the reference signal resource corresponding to the strongest signal quality is arranged in an ascending order according to the identifiers of the reference signal resource sets to which the other reference signal resources belong. The indication information corresponding to the reference signal resources in another group other than the target group is arranged in an ascending order according to the identifiers of the reference signal resource sets to which the reference signal resources belong. Table 7 is the target group, which includes the strongest signal quality, and therefore includes the fifth indication information. Table 8 is the other groups, which do not include the strongest signal quality, and therefore do not include the fifth indication information. The other groups are explained by taking only one group as an example.

**Table 7**

| | |
|---|---|
| fourth indication information ("1001", indicating that reference signal resource sets Set#2, Set#3, Set#4 are included) | |
| fifth indication information ("11", indicating that Set#3 includes the strongest signal quality) | |
| third indication information (SSBRI/CRI) reference signal resource SSBRI/CRI#5 (belong to set#3) | third indication information (L1-RSRP/L1-SINR) absolute value (7 bits) |
| third indication information (SSBRI/CRI) reference signal resource SSBRI/CRI#1 (belong to set#2) | third indication information (L1-RSRP/L1-SINR) relative value (4 bits) |
| third indication information (SSBRI/CRI) reference signal resource SSBRI/CRI#5 (belong to set#4) | third indication information (L1-RSRP/L1-SINR) relative value (4 bits) |

**Table 8**

| | |
|---|---|
| fourth indication information ("1010", indicating that reference signal resource sets Set#1, Set#2, Set#3, Set#4 are included) | |
| third indication information (SSBRI/CRI) reference signal resource SSBRI/CRI#5 (belong to set#1) | third indication information (L1-RSRP/L1-SINR) relative value (4 bits) |
| third indication information (SSBRI/CRI) reference signal resource SSBRI/CRI#1 (belong to set#2) | third indication information (L1-RSRP/L1-SINR) relative value (4 bits) |
| third indication information (SSBRI/CRI) reference signal resource SSBRI/CRI#27 (belong to set#3) | third indication information (L1-RSRP/L1-SINR) relative value (4 bits) |
| third indication information (SSBRI/CRI) reference signal resource SSBRI/CRI#32 (belong to set#4) | third indication information (L1-RSRP/L1-SINR) relative value (4 bits) |

For the above-mentioned various situations, the following is explained by way of example. For example, the indication information corresponding to the reference signal resource corresponding to the strongest signal quality in the target group is located in the first position, and the indication information corresponding to other reference signal resources except the reference signal resource corresponding to the strongest signal quality in the target group is arranged in a descending order according to the identifiers of the reference signal resource sets to which the other reference signal resources belong. The indication information corresponding to the reference signal resources in another group other than the target group is arranged in a descending order according to the identifiers of the reference signal resource sets to which the reference signal resources belong. Table 9 is the target group, which includes the strongest signal quality and therefore includes the fifth indication information. Table 10 is the other groups, which do not include the strongest signal quality and therefore do not include the fifth indication information. The other groups are explained by taking only one group as an example.

**Table 9**

| | |
|---|---|
| fourth indication information ("1001", indicating that reference signal resource sets Set#2, Set#3, Set#4 are included) | |
| fifth indication information (" 11", indicating that Set#3 includes the strongest signal quality) | |
| third indication information (SSBRI/CRI) reference signal resource SSBRI/CRI#5 (belong to set#3) | third indication information (L1-RSRP/L1-SINR) absolute value (7 bits) |
| third indication information (SSBRI/CRI) reference signal resource SSBRI/CRI#1 (belong to set#4) | third indication information (L1-RSRP/L1-SINR) relative value (4 bits) |
| third indication information (SSBRI/CRI) reference signal resource SSBRI/CRI#5 (belong to set#2) | third indication information (L1-RSRP/L1-SINR) relative value (4 bits) |

**Table 10**

| | |
|---|---|
| fourth indication information ("1010", indicating that reference signal resource sets Set#1, Set#2, Set#3, Set#4 are included) | |
| third indication information (SSBRI/CRI) reference signal resource SSBRI/CRI#5 (belong to set#4) | third indication information (L1-RSRP/L1-SINR) relative value (4 bits) |
| third indication information (SSBRI/CRI) reference signal resource SSBRI/CRI#1 (belong to set#3) | third indication information (L1-RSRP/L1-SINR) relative value (4 bits) |
| third indication information (SSBRI/CRI) reference signal resource SSBRI/CRI#27 (belong to set#2) | third indication information (L1-RSRP/L1-SINR) relative value (4 bits) |
| third indication information (SSBRI/CRI) reference signal resource SSBRI/CRI#32 (belong to set#1) | third indication information (L1-RSRP/L1-SINR) relative value (4 bits) |

In addition, when the indication information corresponding to the reference signal resources in the target group according to an embodiment of the present application is arranged according to the identifiers of the reference signal resource sets, the indication information corresponding to the reference signal resource corresponding to the strongest signal quality in the target group is located in the first position, and the indication information corresponding to other reference signal resources in the target group may be arranged in the above-mentioned circular order. For example, reference may be made to Table 11 and Table 12. Table 11 is the target group, which includes the strongest signal quality and therefore includes the fifth indication information. Table 12 is the other groups, which do not include the strongest signal quality and therefore do not include the fifth indication information. The other groups are only described by taking one group as an example.

**Table 11**

| | |
|---|---|
| fourth indication information ("1001", indicating that reference signal resource sets Set#2, Set#3, Set#4 are included) | |
| fifth indication information ("11", indicating that Set#3 includes the strongest signal quality) | |
| third indication information (SSBRI/CRI) reference signal resource SSBRI/CRI#5 (belong to set#3) | third indication information (L1-RSRP/L1-SINR) absolute value (7 bits) |
| third indication information (SSBRI/CRI) reference signal resource SSBRI/CRI#1 (belong to set#4) | third indication information (L1-RSRP/L1-SINR) relative value (4 bits) |
| third indication information (SSBRI/CRI) reference signal resource SSBRI/CRI#5 (belong to set#2) | third indication information (L1-RSRP/L1-SINR) relative value (4 bits) |

**Table 12**

| | |
|---|---|
| fourth indication information ("1010", indicating that reference signal resource sets Set#1, Set#2, Set#3, Set#4 are included) | |
| third indication information (SSBRI/CRI) reference signal resource SSBRI/CRI#5 (belong to set#3) | third indication information (L1-RSRP/L1-SINR) relative value (4 bits) |
| third indication information (SSBRI/CRI) reference signal resource SSBRI/CRI#1 (belong to set#4) | third indication information (L1-RSRP/L1-SINR) relative value (4 bits) |
| third indication information (SSBRI/CRI) reference signal resource SSBRI/CRI#27 (belong to set#1) | third indication information (L1-RSRP/L1-SINR) relative value (4 bits) |
| third indication information (SSBRI/CRI) reference signal resource SSBRI/CRI#32 (belong to set#2) | third indication information (L1-RSRP/L1-SINR) relative value (4 bits) |

On the basis of the embodiment shown in Fig. 4, when the terminal reports each group, each group includes the following indication information:
sixth indication information, which is used to indicate whether the group, to which the sixth indication information belongs, contains reference signal resources in the corresponding reference signal resource set.

In an embodiment of the present application, each group is provided with indication information of reference signal resources corresponding to different reference signal resource sets. That is, if the network device is configured with N reference signal resource sets, each group shall include indication information of the N reference signal resources. However, since the terminal may only support simultaneous reception of reference signal resources corresponding to three reference signal resource sets in a certain group, the indication information corresponding to one reference signal resource is empty. Therefore, the sixth indication information is set in the group for indicating whether the corresponding group contains reference signal resources in the corresponding reference signal resource set.

For example, the sixth indication information is 1 bit. If the sixth indication information is 1, it means that the group corresponding to the sixth indication information contains reference signal resources in the corresponding reference signal resource set. If the sixth indication information is 0, it means that the group corresponding to the sixth indication information does not contain reference signal resources in the corresponding reference signal resource set. Alternatively, if the sixth indication information is 0, it means that the group, to which the sixth indication information belongs, includes the reference signal resources in the corresponding reference signal resource set. If the sixth indication information is 1, it means that the group, to which the sixth indication information belongs, does not include the reference signal resources in the corresponding reference signal resource set.

It should be noted that if the network device is configured with N reference signal resource sets, each group contains N sixth indication information, which are respectively used to indicate whether the N reference signal resource sets are included in the group.

seventh indication information, where the seventh indication information indicates whether the signal quality of the corresponding reference signal resource is the strongest signal quality.

In an embodiment of the present application, if the group includes the strongest signal quality, the seventh indication information in the group indicates whether the signal quality of the corresponding reference signal resource is the strongest signal quality.

For example, the seventh indication information is 1 bit. If the seventh indication information is 1, it means that the seventh indication information indicates the signal quality of the corresponding reference signal resource being the strongest signal quality. If the seventh indication information is 0, it means that the seventh indication information indicates the signal quality of the corresponding reference signal resource being not the strongest signal quality. Alternatively, if the seventh indication information is 0, it means that the seventh indication information indicates the signal quality of the corresponding reference signal resource being the strongest signal quality. If the seventh indication information is 1, it means that the seventh indication information indicates the signal quality of the corresponding reference signal resource being not the strongest signal quality.

It should be noted that the present application is only described by taking the seventh indication information included in the group as an example. In another embodiment, the seventh indication information is included when the group meets certain conditions.

Optionally, when the target group includes the strongest signal quality, the target group includes the seventh indication information. That is to say, when the strongest signal quality is included in the group, the group includes the seventh indication information. When the strongest signal quality is not included in the group, the seventh indication information is not included.

Optionally, in the case where the strongest signal quality is included in the target group, for each reference signal resource set, only when the sixth indication information indicates that the group includes the reference signal resource set, the reference signal resource set has the corresponding seventh indication information. For example, if the network device is configured with N reference signal resource sets, each group contains N sixth indication information, which are respectively used to indicate whether the N reference signal resource sets are included in the group. If the sixth indication information indicates that only two reference signal resource sets are included in the group, then the group only includes the seventh indication information corresponding to the two reference signal resource sets respectively.

It should be noted that the indication information corresponding to each reference signal resource in an embodiment of the present application has been arranged according to the identifier of the reference signal resource set to which the reference signal resource belongs. Therefore, the reference signal resource set to which each reference signal resource belongs may be determined according to the position in the group where the indication information is located.
third indication information, which indicates each reference signal resource identifier and the signal quality corresponding to the reference signal resource identifier.

In some embodiments, at least one group includes the absolute value of the signal quality of the reference signal resource corresponding to the strongest signal quality, and the relative value of the signal quality of the reference signal resource corresponding to the non-strongest signal quality to the strongest signal quality.

Alternatively, at least one group includes the quantized value of the absolute value of the signal quality of the reference signal resource corresponding to the strongest signal quality, and the quantized value of the relative value of the signal quality of the reference signal resource corresponding to the non-strongest signal quality to the strongest signal quality.

The signal quality in an embodiment of the present application is similar to the signal quality indication in the above embodiment, and will not be repeated here.

Optionally, the group includes seventh indication information, and the seventh indication information indicates whether the signal quality of the corresponding reference signal resource is the strongest signal quality. The group also includes the signal quality of the reference signal resource. Then, when the seventh indication information indicates that the signal quality of the corresponding reference signal resource is the strongest signal quality, the signal quality of the reference signal resource is the absolute value. When the seventh indication information indicates that the signal quality of the corresponding reference signal resource is not the strongest signal quality, the third indication information indicates the relative value of the signal quality of the reference signal resource to the strongest signal quality.

Alternatively, the group includes the seventh indication information, and the seventh indication information indicates whether the signal quality of the corresponding reference signal resource is the strongest signal quality. The group also includes the signal quality of the reference signal resource. Then, when the seventh indication information indicates that the signal quality of the corresponding reference signal resource is the strongest signal quality, the signal quality of the reference signal resource is the quantized value of the absolute value. When the seventh indication information indicates that the signal quality of the corresponding reference signal resource is not the strongest signal quality, the third indication information indicates the quantized value of the relative value of the signal quality of the reference signal resource to the strongest signal quality.

In addition, it should be noted that the indication information corresponding to the reference signal resources in each group of at least one group according to an embodiment of the present application is arranged according to the identifiers of the reference signal resource sets to which the reference signal resources corresponding to the signal quality belongs.

Optionally, the indication information corresponding to the reference signal resources in each group of at least one group is arranged according to the identifiers of the reference signal resource sets to which the reference signal resources belong, including any of the following situations:
the indication information corresponding to the reference signal resources in each group of at least one group is arranged in a descending order according to the identifiers of the reference signal resource sets to which the reference signal resources belong.
the indication information corresponding to the reference signal resource in each group of at least one group is arranged in an ascending order according to the identifiers of the reference signal resource sets to which the reference signal resources belong.

According to an embodiment of the present application, the terminal sends a report about N reference signal resource sets in a group-based way. This provides a measurement reporting method that supports more reference signal resource sets, expands the transmission mode, and specifies the indication information included in each group, so that the network device determines the measurement result of the terminal based on the indication information in the group(s), and then sends data based on multiple transmission beams at the same time, thereby improving the transmission efficiency.

For the above-mentioned various situations, the following is explained by way of example. For example, for the indication information corresponding to the reference signal resources in each group of at least one group, they are arranged in an ascending order according to the identifiers of the reference signal resource sets to which the reference signal resources belong. Table 13 is the group including the strongest signal quality. Table 14 is the group not including the strongest signal quality. The other groups are explained by taking only one group as an example, where the i-th column corresponds to the i-th reference signal resource set, and i is a positive integer.

**Table 13**

| | | | |
|---|---|---|---|
| sixth indication information 0 (not exist) | seventh indication information | third indication information (SSBRI/CRI) | third indication information (L1-RSRP/L1-SINR) |
| sixth indication information 1 (exist) | seventh indication information 0 (not the strongest reference signal) | third indication information (SSBRI/CRI) reference signal resource SSBRI/CRI# 1 | third indication information (L1-RSRP/L1-SINR) relative value (4 bits) |
| sixth indication information 1 (exist) | seventh indication information 1 (the strongest reference signal) | third indication information (SSBRI/CRI) reference signal resource SSBRI/CRI#5 | third indication information (L1-RSRP/L1-SINR) absolute value (7 bits) |
| sixth indication information 1 (exist) | seventh indication information 0 (not the strongest reference signal) | third indication information (SSBRI/CRI) reference signal resource SSBRI/CRI#5 | third indication information (L1-RSRP/L1-SINR) relative value (4 bits) |

**Table 14**

| | | |
|---|---|---|
| sixth indication information 1 (exist) | third indication information (SSBRI/CRI) reference signal resource SSBRI/CRI#5 | third indication information (L1-RSRP/L1-SINR) relative value (4 bits) |
| sixth indication information 1 (exist) | third indication information (SSBRI/CRI) reference signal resource SSBRI/CRI# 1 | third indication information (L1-RSRP/L1-SINR) relative value (4 bits) |
| sixth indication information 1 (exist) | third indication information (SSBRI/CRI) reference signal resource SSBRI/CRI#27 | third indication information (L1-RSRP/L1-SINR) relative value (4 bits) |
| sixth indication information 1 (exist) | third indication information (SSBRI/CRI) reference signal resource SSBRI/CRI#32 | third indication information (L1-RSRP/L1-SINR) relative value (4 bits) |

Alternatively, the identifiers of the reference signal resource sets to which the reference signal resources in the group belong according to an embodiment of the present application is arranged in a descending order. That is, the first column corresponds to the last reference signal resource set, the second column corresponds to the second to last reference signal resource set, the third column corresponds to the third to last reference signal resource set, and so on, and the reference signal resource set corresponding to each column may be determined. For example, see Table 15.

**Table 15**

| | | | |
|---|---|---|---|
| sixth indication information 1 (exist) | seventh indication information 0 (not the strongest reference signal) | third indication information (SSBRI/CRI) reference signal resource SSBRI/CRI#5 | third indication information (L1-RSRP/L1-SINR) relative value (4 bits) |
| sixth indication information 1 (exist) | reference signal) | third indication information (SSBRI/CRI) reference signal resource SSBRI/CRI#5 | third indication information (L1-RSRP/L1-SINR) absolute value (7 bits) |
| sixth indication information 1 (exist) | seventh indication information 0 (not the strongest reference signal) | third indication information (SSBRI/CRI) reference signal resource SSBRI/CRI# 1 | third indication information (L1-RSRP/L1-SINR) absolute value (4 bits) |
| sixth indication information 0 (not exist) | seventh indication information | third indication information (SSBRI/CRI) | third indication information (L1-RSRP/L1-SINR) |

On the basis of the embodiment shown in Fig. 4, when the terminal reports each group, each group includes the following indication information:
eighth indication information, where the eighth indication information indicates the reference signal resource set to which the reference signal resource corresponding to the strongest signal quality in the group belongs.

In an embodiment of the present application, for at least one group, there is a reference signal resource corresponding to a reference signal resource set in a group with the strongest signal quality. Therefore, when the group includes the strongest signal quality, the eighth indication information may be used to indicate which reference signal resource set in the group corresponds to the strongest signal quality.

For example, if the network device is configured with 4 reference signal resource sets, the eighth indication information may use 2 bits to indicate which reference signal resource set includes the strongest signal quality. For example, "00" indicates reference signal resource set 1, "01" indicates reference signal resource set 2, "10" indicates reference signal resource set 3, and "11" indicates reference signal resource set 4.
sixth indication information, where the sixth indication information indicates whether the reference signal resource in the corresponding reference signal resource set is included in the group to which the sixth indication information belongs.

It should be noted that the sixth indication information and the reference signal resource set have a one-to-one correspondence. That is, one sixth indication information corresponds to one reference signal resource set.
third indication information, where the third indication information indicates each reference signal resource identifier and the signal quality corresponding to the reference signal resource identifier.

In some embodiments, the following indication information is included in the other groups except the target group among the multiple groups:
the sixth indication information;
the third indication information.

The sixth indication information and the third indication information are similar to the sixth indication information and the third indication information in the above embodiment, and are not repeated here.

In some embodiments, the indication information corresponding to the reference signal resources in each group of at least one group is arranged according to the identifiers of the reference signal resource sets to which the reference signal resources belong.

For the above-mentioned various situations, the following is explained by way of example. For example, for the indication information corresponding to the reference signal resources in each group of at least one group, they are arranged in an ascending order according to the identifiers of the reference signal resource sets to which the reference signal resources belong. Table 16 is a group including the strongest signal quality. Table 17 is a group not including the strongest signal quality. The other groups are explained by taking only one group as an example, where the i-th column corresponds to the i-th reference signal resource set, and i is a positive integer.

**Table 16**

| | | |
|---|---|---|
| eighth indication information: "10", indicating that reference signal resource set Set#3 includes the strongest L1-RSRP/L1-SINR | | |
| sixth indication information 0 (not exist) | third indication information (SSBRI/CRI) | third indication information (L1-RSRP/L1-SINR) |
| sixth indication information 1 (exist) | third indication information (SSBRI/CRI) reference signal resource SSBRI/CRI# 1 | third indication information (L1-RSRP/L1-SINR) relative value (4 bits) |
| sixth indication information 1 (exist) | third indication information (SSBRI/CRI) reference signal resource SSBRI/CRI#5 | third indication information (L1-RSRP/L1-SINR) absolute value (7 bits) |
| sixth indication information 1 (exist) | third indication information (SSBRI/CRI) reference signal resource SSBRI/CRI#5 | third indication information (L1-RSRP/L1-SINR) relative value (4 bits) |

**Table 17**

| | | |
|---|---|---|
| sixth indication information 1 (exist) | third indication information (SSBRI/CRI) reference signal resource SSBRI/CRI#5 | third indication information (L1-RSRP/L1-SINR) relative value (4 bits) |
| sixth indication information 1 (exist) | third indication information (SSBRI/CRI) reference signal resource SSBRI/CRI# 1 | third indication information (L1-RSRP/L1-SINR) relative value (4 bits) |
| sixth indication information 1 (exist) | third indication information (SSBRI/CRI) reference signal resource SSBRI/CRI#27 | third indication information (L1-RSRP/L1-SINR) relative value (4 bits) |
| sixth indication information 1 (exist) | third indication information (SSBRI/CRI) reference signal resource SSBRI/CRI#32 | third indication information (L1-RSRP/L1-SINR) relative value (4 bits) |

Alternatively, the identifiers of the reference signal resource sets to which the reference signal resources in the group belong are arranged in a descending order according to an embodiment of the present application. That is, the first column corresponds to the last reference signal resource set, the second column corresponds to the second to last reference signal resource set, the third column corresponds to the third to last reference signal resource set, and so on, and the reference signal resource set corresponding to each column may be determined. For example, see Table 18.

**Table 18**

| | | |
|---|---|---|
| eighth indication information: "10", indicating that reference signal resource set Set#3 includes the strongest L1-RSRP/L1-SINR | | |
| sixth indication information 0 (not exist) | third indication information (SSBRI/CRI) | third indication information (L1-RSRP/L1-SINR) |
| sixth indication information 1 (exist) | third indication information (SSBRI/CRI) reference signal resource SSBRI/CRI#5 | third indication information (L1-RSRP/L1-SINR) absolute value (7 bits) |
| sixth indication information 1 (exist) | third indication information (SSBRI/CRI) reference signal resource SSBRI/CRI# 1 | third indication information (L1-RSRP/L1-SINR) relative value (4 bits) |
| sixth indication information 1 (exist) | third indication information (SSBRI/CRI) reference signal resource SSBRI/CRI#5 | third indication information (L1-RSRP/L1-SINR) relative value (4 bits) |

In some embodiments, the indication information corresponding to the reference signal resource corresponding to the strongest signal quality included in the target group is located at the first position, and the target group is a group to which the reference signal resource corresponding to the strongest signal quality in at least one group belongs. In addition, the indication information corresponding to other reference signal resources in the target group except the reference signal resource corresponding to the strongest signal quality is arranged according to the identifiers of the reference signal resource sets to which the other reference signal resources belong.

Optionally, the indication information corresponding to other reference signal resources in the target group except the reference signal resource corresponding to the strongest signal quality is arranged according to the identifiers of the reference signal resource sets to which the other reference signal resources belong, including any of the following situations:
for the indication information corresponding to other reference signal resources in the target group except the reference signal resource corresponding to the strongest signal quality, the indication information is arranged in a descending order according to the identifiers of the reference signal resource sets to which the other reference signal resources belong.
for the indication information corresponding to other reference signal resources in the target group except the reference signal resource corresponding to the strongest signal quality, the indication information is arranged in a descending order according to the identifiers of the reference signal resource sets to which the other reference signal resources belong.
for the indication information corresponding to other reference signal resources in the target group except the reference signal resource corresponding to the strongest signal quality, the indication information is arranged in a cyclic order.

The cyclic order is to make arrangements according to the relationship between the identifiers of the reference signal resource sets to which other reference signal resources belong and the identifier of the reference signal resource set to which the reference signal resource corresponding to the strongest signal quality belongs.

Further, the cyclic order may be understood as follows. The indication information corresponding to the reference signal resource corresponding to the strongest signal quality is located in the first position. For the reference signal resource set whose reference signal resource set identifier is greater than the reference signal resource set identifier to which the reference signal resource corresponding to the strongest signal quality belongs, the indication information corresponding to the reference signal resource included in the reference signal resource set is located after the first position. For the reference signal resource set whose reference signal resource set identifier is less than the reference signal resource set identifier to which the reference signal resource corresponding to the strongest signal quality belongs, the indication information corresponding to the reference signal resources included in the reference signal resource set is arranged in an ascending order.

For example, there are 4 reference signal resource sets in total, that is, reference signal resource set #1, reference signal resource set #2, reference signal resource set #3, and reference signal resource set #4. The reference signal resource set to which the reference signal resource corresponding to the strongest signal quality belongs is reference signal resource set #2. The order of the other sets is reference signal resource set #3, reference signal resource set #4, and reference signal resource set #1. That is, the order of the four sets is reference signal resource set #2, reference signal resource set #3, reference signal resource set #4, and reference signal resource set #1.

In some embodiments, the indication information corresponding to the reference signal resources included in other groups except the target group among the multiple groups is arranged according to the identifiers of the reference signal resource sets to which the reference signal resources belong, or arranged according to the arrangement order of the reference signal resources in the target group.

Optionally, the indication information corresponding to the reference signal resources in the other groups except the target group among the multiple groups is arranged according to the identifiers of the reference signal resource sets to which the reference signal resources belong, including any of the following situations:
for the indication information corresponding to the reference signal resources in the other groups except the target group among the multiple groups, the indication information is arranged in a descending order according to the identifiers of the reference signal resource sets to which the reference signal resources belong.
for the indication information corresponding to the reference signal resources in the other groups except the target group among the multiple groups, the indication information is arranged in an ascending order according to the identifiers of the reference signal resource sets to which the reference signal resources belong.

For the above-mentioned various situations, the following is an example. For example, the indication information corresponding to the strongest signal quality in the target group is located in the first position, and the indication information corresponding to other reference signal resources in the target group may be arranged in the above-mentioned cyclic order. The indication information corresponding to the reference signal resources in another group except the target group is arranged in the arrangement order in the target group. Table 19 is the target group, which includes the strongest signal quality and therefore includes the eighth indication information. Table 20 is the other groups, which do not include the strongest signal quality and therefore do not include the eighth indication information. The other groups are only described by taking one group as an example.

**Table 19**

| | | |
|---|---|---|
| eighth indication information: "10", indicating that reference signal resource set Set#3 includes the strongest L1-RSRP/L1-SINR | | |
| sixth indication information 1 (exist) (belong to set#3) | third indication information (SSBRI/CRI) reference signal resource SSBRI/CRI#5 | third indication information (L1-RSRP/L1-SINR) absolute value (7 bits) |
| sixth indication information 1 (exist) (belong to set#4) | third indication information (SSBRI/CRI) reference signal resource SSBRI/CRI# 1 | third indication information (L1-RSRP/L1-SINR) relative value (4 bits) |
| sixth indication information 1 (exist) (belong to set#1) | third indication information (SSBRI/CRI) reference signal resource SSBRI/CRI#5 | third indication information (L1-RSRP/L1-SINR) relative value (4 bits) |
| sixth indication information 1 (exist) (belong to set#2) | third indication information (SSBRI/CRI) reference signal resource SSBRI/CRI#5 | third indication information (L1-RSRP/L1-SINR) relative value (4 bits) |

**Table 20**

| | | |
|---|---|---|
| sixth indication information | third indication information (SSBRI/CRI) | third indication information (L1-RSRP/L1-SINR) |
| 1 (exist) (belong to set#3) | reference signal resource SSBRI/CRI#5 | relative value (4 bits) |
| sixth indication information 1 (exist) (belong to set#4) | third indication information (SSBRI/CRI) reference signal resource SSBRI/CRI# 1 | third indication information (L1-RSRP/L1-SINR) relative value (4 bits) |
| sixth indication information 1 (exist) (belong to set#1) | third indication information (SSBRI/CRI) reference signal resource SSBRI/CRI#27 | third indication information (L1-RSRP/L1-SINR) relative value (4 bits) |
| sixth indication information 1 (exist) (belong to set#2) | third indication information (SSBRI/CRI) reference signal resource SSBRI/CRI#32 | third indication information (L1-RSRP/L1-SINR) relative value (4 bits) |

In addition, it should be noted that the indication information corresponding to the reference signal resources in another group except the target group may also be arranged in an ascending order according to the identifiers of the reference signal resource sets to which the reference signal resources belong, see Table 21, and the other groups are only illustrated by taking one group as an example.

**Table 21**

| | | |
|---|---|---|
| sixth indication information 1 (exist) (belong to set#1) | third indication information (SSBRI/CRI) reference signal resource SSBRI/CRI#27 | third indication information (L1-RSRP/L1-SINR) relative value (4 bits) |
| sixth indication information 1 (exist) (belong to set#2) | third indication information (SSBRI/CRI) reference signal resource SSBRI/CRI#32 | third indication information (L1-RSRP/L1-SINR) relative value (4 bits) |
| sixth indication information 1 (exist) (belong to set#3) | third indication information (SSBRI/CRI) reference signal resource SSBRI/CRI#5 | third indication information (L1-RSRP/L1-SINR) relative value (4 bits) |
| sixth indication information 1 (exist) (belong to set#4) | third indication information (SSBRI/CRI) reference signal resource SSBRI/CRI# 1 | third indication information (L1-RSRP/L1-SINR) relative value (4 bits) |

In addition, Table 21 is only used as an example to illustrate that the indication information corresponding to the reference signal resources in another group except the target group is arranged in an ascending order according to the identifiers of the reference signal resource sets to which the reference signal resources belong. In another embodiment, the indication information corresponding to the reference signal resources in another group except the target group is arranged in a descending order according to the identifiers of the reference signal resource sets to which the reference signal resources belong, and the arrangement method is similar to Table 21, which will not be repeated here.

In addition, it should be understood that in some embodiments, the indication information corresponding to the reference signal resource corresponding to the strongest signal quality included in the target group is located in the first position, and the target group is a group to which the reference signal resource corresponding to the strongest signal quality belongs in at least one group. In addition, the indication information corresponding to other reference signal resources except the reference signal resource corresponding to the strongest signal quality in the target group may be arranged in an ascending order according to the identifiers of the reference signal resource sets to which the other reference signal resources belong. In addition, it should be understood that the indication information corresponding to other reference signal resources except the reference signal resource corresponding to the strongest signal quality in the target group may also be arranged in a descending order according to the identifiers of the reference signal resource sets to which the other reference signal resources belong, which will not be repeated here.

For example, referring to Table 22, the indication information corresponding to other reference signal resources in the target group except the reference signal resource corresponding to the strongest signal quality is arranged in an ascending order according to the identifiers of the reference signal resource sets to which the other reference signal resources belong.

**Table 22**

| | | |
|---|---|---|
| eighth indication information: "10", indicating that reference signal resource set Set#3 includes the strongest L1-RSRP/L1-SINR | | |
| sixth indication information 1 (exist) (belong to set#3) | third indication information (SSBRI/CRI) reference signal resource SSBRI/CRI#5 | third indication information (L1-RSRP/L1-SINR) absolute value (7 bits) |
| sixth indication information 1 (exist) (belong to set#1) | third indication information (SSBRI/CRI) reference signal resource SSBRI/CRI#5 | third indication information (L1-RSRP/L1-SINR) relative value (4 bits) |
| sixth indication information 1 (exist) (belong to set#2) | third indication information (SSBRI/CRI) reference signal resource SSBRI/CRI#5 | third indication information (L1-RSRP/L1-SINR) relative value (4 bits) |
| sixth indication information 1 (exist) (belong to set#4) | third indication information (SSBRI/CRI) reference signal resource SSBRI/CRI# 1 | third indication information (L1-RSRP/L1-SINR) relative value (4 bits) |

In addition, it should be noted that the indication information corresponding to the reference signal resources in another group except the target group is arranged in an ascending order according to the identifiers of the reference signal resource sets to which the reference signal resources belong, see Table 23, and the other groups are only illustrated by taking one group as an example.

**Table 23**

| | | |
|---|---|---|
| sixth indication information 1 (exist) (belong to set#1) | third indication information (SSBRI/CRI) reference signal resource SSBRI/CRI#27 | third indication information (L1-RSRP/L1-SINR) relative value (4 bits) |
| sixth indication information 1 (exist) (belong to set#2) | third indication information (SSBRI/CRI) reference signal resource SSBRI/CRI#32 | third indication information (L1-RSRP/L1-SINR) relative value (4 bits) |
| sixth indication information 1 (exist) (belong to set#3) | third indication information (SSBRI/CRI) reference signal resource SSBRI/CRI#5 | third indication information (L1-RSRP/L1-SINR) relative value (4 bits) |
| sixth indication information 1 (exist) (belong to set#4) | third indication information (SSBRI/CRI) reference signal resource SSBRI/CRI# 1 | third indication information (L1-RSRP/L1-SINR) relative value (4 bits) |

In addition, Table 23 is only used as an example to illustrate that the indication information corresponding to the reference signal resources in another group except the target group is arranged in an ascending order according to the identifiers of the reference signal resource sets to which the reference signal resources belong. In another embodiment, the indication information corresponding to the reference signal resources in another group except the target group is arranged in a descending order according to the identifiers of the reference signal resource sets to which the reference signal resources belong, and the arrangement method is similar to Table 23, which is not repeated here. In addition, the indication information corresponding to the reference signal resources in another group except the target group may also be arranged according to the arrangement order of the reference signal resources in the target group.

FIG. 6 shows a block diagram of a reporting apparatus provided by an example embodiment of the present application. Referring to FIG. 6, the apparatus includes:
a receiving module 601, configured to receive configuration information sent by a network device, where the configuration information includes N reference signal resource sets, and N is a positive integer greater than 2; and
a reporting module 602, configured to send a report about the N reference signal resource sets based on at least one group according to the configuration information, where each group includes M reference signal resources, and M is a positive integer greater than 1 and not greater than N.

In some embodiments, the M reference signal resources belong to different reference signal resource sets.

In some embodiments, each reference signal resource set corresponds to a TRP.

In some embodiments, the reference signal resource set includes at least one CSI-RS resource and/or at least one SSB resource.

In some embodiments, the M reference signal resources in each group of at least one group are M reference signal resources that the terminal supports receiving simultaneously.

In some embodiments, each group includes at least one of the following indication information:
first indication information, where the first indication information indicates the number of reference signal resources included in a group;
second indication information, where the second indication information indicates the identifier of the reference signal resource set corresponding to each parameter pair, and the parameter pair includes the reference signal resource identifier and the signal quality corresponding to the reference signal resource identifier;
third indication information, where the third indication information indicates each reference signal resource identifier and the signal quality corresponding to the reference signal resource identifier.

In some embodiments, the indication information corresponding to the reference signal resource corresponding to the strongest signal quality in the target group among at least one group is located at the first position, and the target group is a group to which the reference signal resource corresponding to the strongest signal quality in at least one group belongs.

In some embodiments, the indication information corresponding to other reference signal resources in the target group except the reference signal resource corresponding to the strongest signal quality is arranged according to the identifiers of the reference signal resource sets to which the other reference signal resources belong.

In some embodiments, the indication information corresponding to the reference signal resources in other groups except the target group among at least one group is arranged according to the identifiers of the reference signal resource sets to which the reference signal resources belong, or arranged according to the arrangement order of the reference signal resources in the target group.

In some embodiments, each group includes at least one of the following indication information:
fourth indication information, where the fourth indication information indicates the reference signal resource sets corresponding to the reference signal resources included in the group to which the fourth indication information belongs;
fifth indication information, where the fifth indication information indicates the identifier of the reference signal resource set to which the reference signal resource corresponding to the strongest signal quality belongs;
third indication information, where the third indication information indicates each reference signal resource identifier and the signal quality corresponding to the reference signal resource identifier.

In some embodiments, the indication information of the reference signal resource corresponding to the strongest signal quality in the target group among at least one group is located in the first position, and the target group is the group to which the reference signal resource corresponding to the strongest signal quality belongs in at least one group.

In some embodiments, the indication information corresponding to other reference signal resources in the target group except the reference signal resource corresponding to the strongest signal quality is arranged according to the identifiers of the reference signal resource sets to which the other reference signal resources belong.

In some embodiments, the indication information corresponding to the reference signal resources included in other groups except the target group among at least one group is arranged according to the identifiers of the reference signal resource sets to which the reference signal resources belong, or, according to the arrangement order of the reference signal resources in the target group.

In some embodiments, each group includes at least one of the following indication information:
sixth indication information, where the sixth indication information is used to indicate whether the group, to which the sixth indication information belongs, contains the reference signal resources in the corresponding reference signal resource set;
seventh indication information, where the seventh indication information indicates whether the signal quality of the corresponding reference signal resource is the strongest signal quality;
third indication information, where the third indication information indicates each reference signal resource identifier and the signal quality corresponding to the reference signal resource identifier.

In some embodiments, each group includes at least one of the following indication information:
eighth indication information, where the eighth indication information indicates the reference signal resource set to which the reference signal resource corresponding to the strongest signal quality in the group belongs;
sixth indication information, where the sixth indication information is used to indicate whether the group, to which the sixth indication information belongs, contains the reference signal resources in the corresponding reference signal resource set;
third indication information, where the third indication information indicates each reference signal resource identifier and the signal quality corresponding to the reference signal resource identifier.

In some embodiments, the indication information corresponding to the reference signal resources in each group of at least one group is arranged according to the identifiers of the reference signal resource sets to which the reference signal resources belong.

In some embodiments, the signal quality corresponding to the reference signal resource identifier includes:
in at least one group, comprising the absolute value of the signal quality of the reference signal resource corresponding to the strongest signal quality, and the relative value of the signal quality of the reference signal resource corresponding to the non-strongest signal quality to the strongest signal quality; or
in at least one group, comprising the quantized value of the absolute value of the signal quality of the reference signal resource corresponding to the strongest signal quality, and the quantized value of the relative value of the signal quality of the reference signal resource corresponding to the non-strongest signal quality to the strongest signal quality.

It should be noted that the apparatus provided in the above embodiment, when implementing functions thereof, is only illustrated by the division of the above functional modules. In practical applications, the above functions may be assigned to different functional modules as needed. That is, the internal structure of the apparatus may be divided into different functional modules to complete all or part of the functions described above. In addition, the apparatus and method embodiments provided in the above embodiments belong to the same concept, and the specific implementations are detailed in the method embodiments, which will not be repeated here.

Fig. 7 shows a block diagram of a reporting apparatus provided by an example embodiment of the present application. Referring to Fig. 7, the apparatus includes:
sending module 701, configured to send configuration information to a terminal, where the configuration information includes N reference signal resource sets, and N is a positive integer greater than 2;
receiving module 702, configured to receive at least one group reported by the terminal, where the at least one group is reported by the terminal according to the N reference signal resource sets in the configuration information, each group includes M reference signal resources, and M is a positive integer greater than 1 and not greater than N.

In some embodiments, the M reference signal resources belong to different reference signal resource sets.

In some embodiments, each reference signal resource set corresponds to a TRP.

In some embodiments, the reference signal resource set includes at least one CSI-RS resource and/or at least one SSB resource.

In some embodiments, the M reference signal resources in each group of the at least one group are M reference signal resources that the terminal supports receiving simultaneously.

In some embodiments, each group includes at least one of the following indication information:
first indication information, where the first indication information indicates the number of reference signal resources included in a group;
second indication information, where the second indication information indicates the identifier of the reference signal resource set corresponding to each parameter pair, and the parameter pair includes the reference signal resource identifier and the signal quality corresponding to the reference signal resource identifier;
third indication information, where the third indication information indicates each reference signal resource identifier and the signal quality corresponding to the reference signal resource identifier.

In some embodiments, the indication information corresponding to the reference signal resource corresponding to the strongest signal quality in the target group among at least one group is located at the first position, and the target group is the group to which the reference signal resource corresponding to the strongest signal quality belongs in at least one group.

In some embodiments, the indication information corresponding to other reference signal resources in the target group except the reference signal resource corresponding to the strongest signal quality is arranged according to the identifiers of the reference signal resource sets to which the other reference signal resources belong.

In some embodiments, the indication information corresponding to the reference signal resources in other groups except the target group among at least one group is arranged according to the identifiers of the reference signal resource sets to which the reference signal resources belong, or arranged according to the arrangement order of the reference signal resources in the target group.

In some embodiments, each group includes at least one of the following indication information:
fourth indication information, where the fourth indication information indicates the reference signal resource sets corresponding to the reference signal resources included in the group to which the fourth indication information belongs;
fifth indication information, where the fifth indication information indicates the identifier of the reference signal resource set to which the reference signal resource corresponding to the strongest signal quality belongs;
third indication information, where the third indication information indicates each reference signal resource identifier and the signal quality corresponding to the reference signal resource identifier.

In some embodiments, the indication information of the reference signal resource corresponding to the strongest signal quality in the target group among the at least one group is located in the first position, and the target group is the group to which the reference signal resource corresponding to the strongest signal quality belongs in the at least one group.

In some embodiments, the indication information corresponding to other reference signal resources in the target group except the reference signal resource corresponding to the strongest signal quality is arranged according to the identifiers of the reference signal resource sets to which the other reference signal resources belong.

In some embodiments, the indication information corresponding to the reference signal resources included in the other groups except the target group among the at least one group is arranged according to the identifiers of the reference signal resource sets to which the reference signal resources belong, or arranged according to the arrangement order of the reference signal resources in the target group.

In some embodiments, each group includes at least one of the following indication information:
sixth indication information, which is used to indicate whether the group, to which the sixth indication information belongs, contains the reference signal resources in the corresponding reference signal resource set;
seventh indication information, which is used to indicate whether the signal quality of the corresponding reference signal resource is the strongest signal quality;
third indication information, which is used to indicate each reference signal resource identifier and the signal quality corresponding to the reference signal resource identifier.

In some embodiments, each group includes at least one of the following indication information:
eighth indication information, which is used to indicate the reference signal resource set to which the reference signal resource corresponding to the strongest signal quality in the group belongs;
sixth indication information, which is used to indicate whether the group, to which the sixth indication information belongs, contains the reference signal resources in the corresponding reference signal resource set;
third indication information, which is used to indicate each reference signal resource identifier and the signal quality corresponding to the reference signal resource identifier.

In some embodiments, the indication information corresponding to the reference signal resources in each group of at least one group is arranged according to the identifiers of the reference signal resource sets to which the reference signal resources belong.

In some embodiments, the signal quality corresponding to the reference signal resource identifier includes:
in at least one group, comprising the absolute value of the signal quality of the reference signal resource corresponding to the strongest signal quality, and the relative value of the signal quality of the reference signal resource corresponding to the non-strongest signal quality to the strongest signal quality; or
in at least one group, comprising the quantized value of the absolute value of the signal quality of the reference signal resource corresponding to the strongest signal quality, and the quantized value of the relative value of the signal quality of the reference signal resource corresponding to the non-strongest signal quality to the strongest signal quality.

It should be noted that the apparatus provided in the above embodiment, when implementing functions thereof, is only illustrated by the division of the above functional modules. In actual applications, the above functions may be divided by different functional modules as needed. That is, the internal structure of the apparatus may be divided into different functional modules to complete all or part of the functions described above. In addition, the apparatus and method embodiments provided in the above embodiments belong to the same concept, and the specific implementations are detailed in the method embodiments, which will not be repeated here.

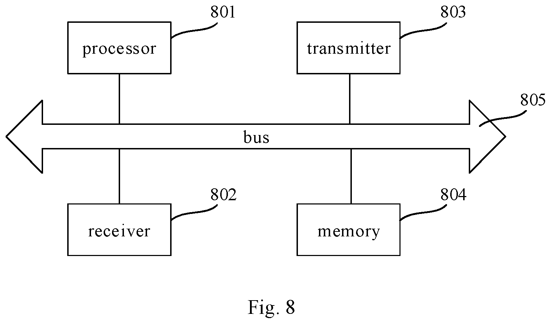

Fig. 8 shows a schematic structural diagram of a communication device provided by an example embodiment of the present application. The communication device comprising: a processor 801, a receiver 802, a transmitter 803, a memory 804, and a bus 805.

The processor 801 comprises one or more processing cores, and the processor 801 executes various functional applications and information processing by running software programs and modules.

The receiver 802 and the transmitter 803 may be implemented as a communication component, which may be a communication chip.

The memory 804 is connected to the processor 801 via the bus 805.

The memory 804 may be used to store at least one program code, and the processor 801 is used to execute the at least one program code to implement the various steps in the above method embodiments.

In addition, the communication device may be a terminal or a network device. The memory 804 may be implemented by any type of volatile or non-volatile storage device or a combination thereof. The volatile or non-volatile storage device includes but is not limited to: a magnetic disk or optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In an exemplary embodiment, a computer-readable storage medium is also provided, in which an executable program code is stored. The executable program code is loaded and executed by a processor to implement the reporting method performed by the communication device and provided in the above-mentioned various method embodiments.

In an exemplary embodiment, a chip is provided. The chip includes a programmable logic circuit and/or a program instruction. When the chip is running on a terminal or a network device, the reporting method provided in the various method embodiments is implemented.

In an example embodiment, a computer program product is provided. When the computer program product is executed by a processor of a terminal or a network device, the reporting method as provided in the above-mentioned various method embodiments is implemented.

Those of ordinary skills in the art can understand that all or part of the steps for implementing the above embodiments may be completed by hardware, or by a program to instruct the relevant hardware to complete the steps. The program may be stored in a computer-readable storage medium. The storage medium mentioned above may be a read-only memory, a magnetic disk, or an optical disk, etc.

The above contents are only optional embodiments of the present application and are not intended to limit the present application. Any modification, equivalent replacement, improvement, etc. made within the spirit and principle of the present application shall be included in the protection scope of the present application.

## Claims

1. A reporting method, performed by a terminal and comprising:
receiving configuration information sent by a network device, wherein the configuration information comprises N reference signal resource sets, where N is a positive integer greater than 2; and
sending a report about the N reference signal resource sets based on at least one group according to the configuration information, wherein each group comprises M reference signal resources, where M is a positive integer greater than 1 and not greater than N.

2. The method according to claim 1, wherein the M reference signal resources belong to different reference signal resource sets.

3. The method according to claim 1, wherein each reference signal resource set corresponds to a Transmission Reception Point TRP.

4. The method according to claim 1, wherein the reference signal resource set comprises at least one Channel State Information Reference Signal CSI-RS resource and/or at least one Synchronization Signal Block SSB resource.

5. The method according to claim 1, wherein the M reference signal resources in each group of the at least one group are M reference signal resources supported by the terminal for simultaneous reception.

6. The method according to any one of claims 1 to 5, wherein each group comprises at least one of the following indication information:
first indication information, wherein the first indication information indicates the number of reference signal resources comprised in a group;
second indication information, wherein the second indication information indicates an identifier of the reference signal resource set corresponding to each parameter pair, and the parameter pair comprises a reference signal resource identifier and a signal quality corresponding to the reference signal resource identifier; or
third indication information, wherein the third indication information indicates each reference signal resource identifier and the signal quality corresponding to the reference signal resource identifier.

7. The method according to claim 6, wherein
the indication information corresponding to the reference signal resource corresponding to the strongest signal quality in a target group among the at least one group is located in a first position, and
the target group is a group to which the reference signal resource corresponding to the strongest signal quality belongs among the at least one group.

8. The method according to claim 7, wherein the indication information corresponding to other reference signal resources in the target group except the reference signal resource corresponding to the strongest signal quality is arranged according to the identifiers of the reference signal resource sets to which the other reference signal resources belong.

9. The method according to claim 7 or 8, wherein the indication information corresponding to the reference signal resources in other groups except the target group among the at least one group is arranged according to the identifiers of the reference signal resource sets to which the reference signal resources belong, or arranged according to an arrangement order of the reference signal resources in the target group.

10. The method according to any one of claims 1 to 5, wherein each group comprises at least one of the following indication information:
fourth indication information, wherein the fourth indication information indicates the reference signal resource set corresponding to the reference signal resource comprised in the group to which the fourth indication information belongs;
fifth indication information, wherein the fifth indication information indicates the identifier of the reference signal resource set to which the reference signal resource corresponding to the strongest signal quality belongs; or
third indication information, wherein the third indication information indicates each reference signal resource identifier and the signal quality corresponding to the reference signal resource identifier.

11. The method according to any one of claims 6 to 10, wherein
the indication information corresponding to the reference signal resource corresponding to the strongest signal quality in a target group among the at least one group is located in a first position, and
the target group is a group to which the reference signal resource corresponding to the strongest signal quality belongs among the at least one group.

12. The method according to claim 11, wherein the indication information corresponding to other reference signal resources except the reference signal resource corresponding to the strongest signal quality in the target group is arranged according to the identifiers of the reference signal resource sets to which the other reference signal resources belong.

13. The method according to claim 11 or 12, wherein the indication information corresponding to the reference signal resources comprised in other groups except the target group among the at least one group is arranged according to the identifiers of the reference signal resource sets to which the reference signal resources belong, or arranged according to an arrangement order of the reference signal resources in the target group.

14. The method according to any one of claims 1 to 5, wherein each group comprises at least one of the following indication information:
sixth indication information, wherein the sixth indication information indicates whether the group, to which the sixth indication information belongs, contains the reference signal resource in the corresponding reference signal resource set;
seventh indication information, wherein the seventh indication information indicates whether the signal quality of the corresponding reference signal resource is the strongest signal quality; or
third indication information, wherein the third indication information indicates each reference signal resource identifier and the signal quality corresponding to the reference signal resource identifier.

15. The method according to any one of claims 1 to 5, wherein each group comprises at least one of the following indication information:
eighth indication information, wherein the eighth indication information indicates the reference signal resource set to which the reference signal resource corresponding to the strongest signal quality in the group belongs;
sixth indication information, wherein the sixth indication information indicates whether the group, to which the sixth indication information belongs, contains the reference signal resource in the corresponding reference signal resource set; or
third indication information, wherein the third indication information indicates each reference signal resource identifier and the signal quality corresponding to the reference signal resource identifier.

16. The method according to claim 14 or 15, wherein the indication information corresponding to the reference signal resources in each group of the at least one group is arranged according to the identifiers of the reference signal resource sets to which the reference signal resources belong.

17. The method according to any one of claims 6 to 16, wherein the signal quality corresponding to the reference signal resource identifier comprises:
in the at least one group, comprising an absolute value of the signal quality of the reference signal resource corresponding to the strongest signal quality, and a relative value of the signal quality of the reference signal resource corresponding to a non-strongest signal quality to the strongest signal quality; or
in the at least one group, comprising a quantized value of the absolute value of the signal quality of the reference signal resource corresponding to the strongest signal quality, and a quantized value of the relative value of the signal quality of the reference signal resource corresponding to the non-strongest signal quality to the strongest signal quality.

18. A reporting method, performed by a network device and comprising:
sending configuration information to a terminal, wherein the configuration information comprises N reference signal resource sets, where N is a positive integer greater than 2; and
receiving at least one group reported by the terminal, wherein the at least one group is reported by the terminal according to the N reference signal resource sets in the configuration information, and each group comprises M reference signal resources, where M is a positive integer greater than 1 and not greater than N.

19. The method according to claim 18, wherein the M reference signal resources belong to different reference signal resource sets.

20. The method according to claim 18, wherein each reference signal resource set corresponds to a TRP.

21. The method according to claim 18, wherein the reference signal resource set comprises at least one CSI-RS resource and/or at least one SSB resource.

22. The method according to claim 18, wherein the M reference signal resources in each group of the at least one group are M reference signal resources supported by the terminal for simultaneous reception.

23. The method according to any one of claims 18 to 22, wherein each group comprises at least one of the following indication information:
first indication information, wherein the first indication information indicates the number of reference signal resources comprised in a group;
second indication information, wherein the second indication information indicates an identifier of the reference signal resource set corresponding to each parameter pair, and the parameter pair comprises a reference signal resource identifier and a signal quality corresponding to the reference signal resource identifier; or
third indication information, wherein the third indication information indicates each reference signal resource identifier and the signal quality corresponding to the reference signal resource identifier.

24. The method according to claim 23, wherein
the indication information corresponding to the reference signal resource corresponding to the strongest signal quality in a target group among the at least one group is located in a first position, and
the target group is a group to which the reference signal resource corresponding to the strongest signal quality belongs in the at least one group.

25. The method according to claim 24, wherein the indication information corresponding to other reference signal resources in the target group except the reference signal resource corresponding to the strongest signal quality is arranged according to the identifiers of the reference signal resource sets to which the other reference signal resources belong.

26. The method according to claim 24 or 25, wherein the indication information corresponding to the reference signal resources in other groups except the target group among the at least one group is arranged according to the identifiers of the reference signal resource sets to which the reference signal resources belong, or arranged according to an arrangement order of the reference signal resources in the target group.

27. The method according to any one of claims 18 to 22, wherein each group comprises at least one of the following indication information:
fourth indication information, wherein the fourth indication information indicates the reference signal resource set corresponding to the reference signal resource comprised in the group to which the fourth indication information belongs;
fifth indication information, wherein the fifth indication information indicates the identifier of the reference signal resource set to which the reference signal resource corresponding to the strongest signal quality belongs; or
third indication information, wherein the third indication information indicates each reference signal resource identifier and the signal quality corresponding to the reference signal resource identifier.

28. The method according to any one of claims 23 to 27, wherein
the indication information corresponding to the reference signal resource corresponding to the strongest signal quality in a target group among the at least one group is located in a first position, and
the target group is a group to which the reference signal resource corresponding to the strongest signal quality belongs in the at least one group.

29. The method according to claim 28, wherein the indication information corresponding to other reference signal resources in the target group except the reference signal resource corresponding to the strongest signal quality is arranged according to the identifiers of the reference signal resource sets to which the other reference signal resources belong.

30. The method according to claim 28 or 29, wherein the indication information corresponding to the reference signal resources comprised in other groups except the target group among the at least one group is arranged according to the identifiers of the reference signal resource sets to which the reference signal resources belong, or arranged according to an arrangement order of the reference signal resources in the target group.

31. The method according to any one of claims 18 to 22, wherein each group comprises at least one of the following indication information:
sixth indication information, wherein the sixth indication information indicates whether the group, to which the sixth indication information belongs, contains the reference signal resource in the corresponding reference signal resource set;
seventh indication information, wherein the seventh indication information indicates whether the signal quality of the corresponding reference signal resource is the strongest signal quality; or
third indication information, wherein the third indication information indicates each reference signal resource identifier and the signal quality corresponding to the reference signal resource identifier.

32. The method according to any one of claims 18 to 22, wherein each group comprises at least one of the following indication information:
eighth indication information, wherein the eighth indication information indicates the reference signal resource set to which the reference signal resource corresponding to the strongest signal quality in the group belongs;
sixth indication information, wherein the sixth indication information indicates whether the group, to which the sixth indication information belongs, contains the reference signal resource in the corresponding reference signal resource set; or
third indication information, wherein the third indication information indicates each reference signal resource identifier and the signal quality corresponding to the reference signal resource identifier.

33. The method according to claim 31 or 32, wherein the indication information corresponding to the reference signal resources in each group of the at least one group is arranged according to the identifiers of the reference signal resource sets to which the reference signal resources belong.

34. The method according to any one of claims 23 to 33, wherein the signal quality corresponding to the reference signal resource identifier comprises:
in the at least one group, comprising an absolute value of the signal quality of the reference signal resource corresponding to the strongest signal quality, and a relative value of the signal quality of the reference signal resource corresponding to a non-strongest signal quality to the strongest signal quality; or
in the at least one group, comprising a quantized value of the absolute value of the signal quality of the reference signal resource corresponding to the strongest signal quality, and a quantized value of the relative value of the signal quality of the reference signal resource corresponding to the non-strongest signal quality to the strongest signal quality.

35. A reporting apparatus, comprising:
a receiving module, configured to receive configuration information sent by a network device, wherein the configuration information comprises N reference signal resource sets, where N is a positive integer greater than 2; and
a reporting module, configured to send a report about the N reference signal resource sets based on at least one group according to the configuration information, wherein each group comprises M reference signal resources, where M is a positive integer greater than 1 and not greater than N.

36. A reporting apparatus, comprising:
a sending module, configured to send configuration information to a terminal, wherein the configuration information comprises N reference signal resource sets, where N is a positive integer greater than 2; and
a receiving module, configured to receive at least one group reported by a terminal, wherein the at least one group is reported by the terminal according to the N reference signal resource sets in the configuration information, and each group comprises M reference signal resources, where M is a positive integer greater than 1 and not greater than N.

37. A terminal, comprising:
a processor; and
a transceiver connected to the processor, wherein
the processor is configured to load and execute executable instructions to implement the reporting method according to any one of claims 1 to 17.

38. A network device, comprising:
a processor; and
a transceiver connected to the processor, wherein
the processor is configured to load and execute executable instructions to implement the reporting method according to any one of claims 18 to 34.

39. A computer-readable storage medium, wherein the computer-readable storage medium stores an executable program code, and the executable program code is loaded and executed by a processor to implement the reporting method according to any one of claims 1 to 34.

40. A computer program product, wherein when the computer program product is executed by a processor of a terminal or a network device, the reporting method according to any one of claims 1 to 34 is implemented.
